# EUROPEAN PATENT APPLICATION

(11) **EP 1 093 292 A2**
(43) Date of publication of application: **18.04.2001**
(21) Application number: 00122179.5
(22) Date of filing: 12.10.2000
(51) Int. Cl.: H04N 1/32

(54) **Document reading apparatus and method**

(30) Priority: 13.10.1999 JP 29167399; 13.06.2000 JP 2000177409; 13.06.2000 JP 2000177410; 25.08.2000 JP 2000255864
(71) Applicant: CANON DENSHI KABUSHIKI KAISHA, Chichibu-shi Saitama-ken (JP)
(72) Inventor: Negishi, Ryuichi, Ohaza, Chichibu-shi, Saitama (JP); Inoue, Shoichi, Ohaza, Chichibu-shi, Saitama (JP); Arafune, Shoji, Ohaza, Chichibu-shi, Saitama (JP); Tsuchiya, Hiroyuki, Ohaza, Chichibu-shi, Saitama (JP); Arai, Takashi, Ohaza, Chichibu-shi, Saitama (JP)
(74) Representative: Leson, Thomas Johannes Alois, Dipl.-Ing.

(57) **Abstract**

Image information of a document is read by a linear image sensor, and the read image information is stored in a first buffer memory. Upon displaying the image information, the image information stored in the first buffer memory is output to and stored in a second buffer memory and display memory. Storage in the first buffer memory, and output and storage to the second buffer memory and display memory are independently done.

## Description

### FIELD OF THE INVENTION

The present invention relates to a document reading apparatus and method and, more particularly, to a document reading apparatus and method, which read a document image or the like using a linear image sensor and output the read image data to a display apparatus connected thereto as a video signal.

### BACKGROUND OF THE INVENTION

Conventionally, presentation is done using a slide or overhead projector (OHP). However, as personal computers have prevailed, presentation as a combination of a personal computer and liquid crystal projector is also done. Even when a liquid crystal projector is used, printed matter and handwritten documents are often used as supplementary references, and a document reading apparatus which can be used in combination with a liquid crystal projector is demanded.

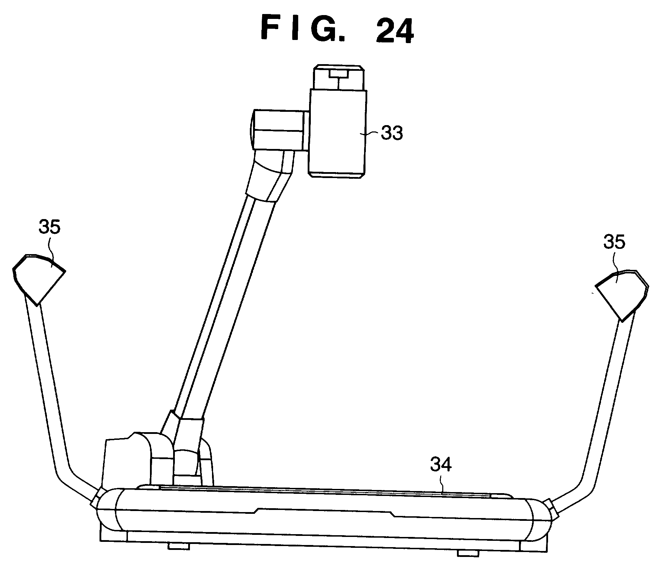

As a document reading apparatus that can meet the above demand, a document reading apparatus which reads image information of a document or the like on a document table using a video camera that uses an area image sensor such as a CCD, and outputs image data as a video signal, i.e., a so-called picture camera, is known. Fig. 24 shows an example of such apparatus.

Referring to Fig. 24, reference numeral 33 denotes a video camera using an area image sensor; 34, a document table on which a document is placed; and 35, an illumination device for illuminating the document on the document table. Such document reading apparatus is commercially available as an apparatus that makes presentation while being connected to a liquid crystal projector or an apparatus for inputting images while being connected to or a video meeting system.

However, since the document reading apparatus using an area image sensor uses a video camera that has been developed for moving images, if it is used as an apparatus for making presentation while being connected to a liquid crystal projector, it has a merit of instantaneously reading a document image for one frame, but suffers the following demerits.
(1) In general, the area image sensor has a relatively low resolution, and can hardly warrant a resolution high enough to read and output characters of a text document or the like.
(2) Since an NTSC signal, S signal, or the like used in a conventional color television or the like is used as an output video signal, a feature of a high-quality display apparatus such as a liquid crystal projector or the like as a transmission path cannot be utilized.
(3) Since an optical path is defined by a plane, it is hard to attain a size reduction of the apparatus by bending an optical path using reflections of many mirrors and the like, and the apparatus size is large both upon operation and storage.

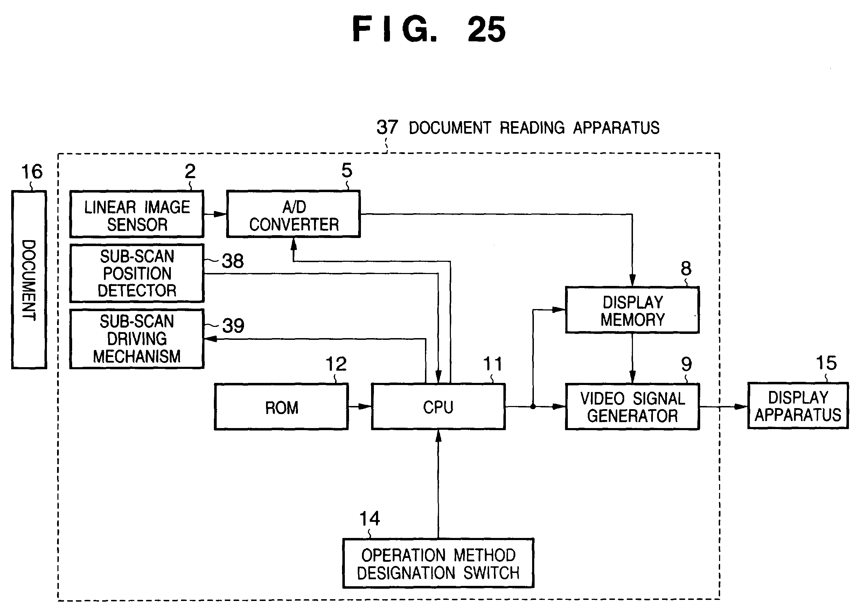

To combat such demerits, a document reading apparatus using a linear image sensor that can realize a high resolution in place of the area image sensor has been proposed. Fig. 25 is a block diagram showing an example of such apparatus.

Fig. 25 shows a conventional document reading apparatus 37 using a linear image sensor. Reference numeral 2 denotes a linear image sensor; 5, an A/D converter for converting image information output from the linear image sensor 2 into digital data; 8, a display memory for storing data output from the A/D converter 5; 9, a video signal generator; 11, a CPU for controlling the operation of the overall apparatus; 12, a ROM for storing a control program of the CPU 11; 14, an operation method designation switch; 15, a display apparatus such as a liquid crystal display or the like; 16, a document to be read by the document reading apparatus 37; 38, a sub-scan position detector; and 39, a sub-scan driving mechanism.

However, the document reading apparatus using the linear image sensor shown in Fig. 25 suffers the following shortcomings.
(1) Since the read document data is directly written in the display memory 8, a document image cannot be read during display. Hence, since the next document read operation starts after an image switching request is issued upon completion of an explanation of the displayed image, the total time from read to display becomes a wait time.
(2) When a display memory for a plurality of images is mounted to shorten the wait time before display, a plurality of document images can be read in advance. However, in such case, a document read process as a pre-process requires a long time. In order to use many document images, the display memory must have a size corresponding to the required number of documents, and a large-size memory must be mounted.
(3) Since the linear image sensor has a relatively high resolution but the display apparatus has a low resolution, the read document data is decimated while it is transferred to the display memory. For this reason, when rotation conversion or the like of an image is done after display, since the decimated data must undergo conversion in place of the read data, the image deteriorates every time it is converted.
(4) Since the data structure of the display memory is determined by the circuit arrangement, the memory cannot store an image that has been compressed by an arbitrary method, resulting in poor saving efficiency.
(5) Since the document reading apparatus that uses the linear image sensor requires a document read process upon displaying a document, it requires a longer image read time than the document reading apparatus using the area image sensor, and the wait time between the neighboring display (display output) timings of images is prolonged. Since there is no function of storing a plurality of document data, if a document that has been read previously is to he rendered again, it must be read again.

In the document reading apparatus having the area or linear sensor, the output from the document reading apparatus is predetermined to he a video output with a low resolution such as NTSC or the like, and the apparatus cannot cope with a high-definition RGB output for, e.g., a PC.

Furthermore, in the aforementioned document reading apparatus, when a document image is read, and its image data is output to and displayed by the liquid crystal projector or the like, moiré is generated.

### SUMMARY OF THE INVENTION

The present invention has been made in consideration of the above situation, and has as its first object to provide a compact, inexpensive document reading apparatus and method, which have a resolution high enough to read and output characters of a text document or the like, can read the next document image during display of a given image to shorten the display switching time, can obviate the need for any display pro-process, and can simultaneously handle many documents.

According to the present invention, the foregoing first object is attained by providing a document reading apparatus comprising: reading means, having a linear image sensor, for reading image information of a document; sub-scan means for changing a relative position between said reading means and a document image at a predetermined speed in a direction perpendicular to a main scan direction of the linear image sensor; an A/D converter for converting the image information from said reading means into digital image data; a buffer memory for at least temporarily storing the image data from said A/D converter; first transfer means for transferring the image data from said A/D converter to said buffer memory; a display memory for storing the image data output from said buffer memory; second transfer means for transferring the image data from said buffer memory to said display memory; output means, connected to a display apparatus, for outputting the image data stored in said display memory to the display apparatus; and control means for independently controlling a process from when said reading means reads the image information until said first transfer means transfers the image data to said buffer memory, and a process for outputting the image data stored in said display memory from said output means.

Further, the foregoing first object is also attained by providing a document reading method comprising: the reading step of reading image information of a document using a linear image sensor; the first storage step of at least temporarily storing the image information in a buffer memory; the second storage step of storing the image information output from the buffer memory in a display memory; and the output step of outputting the image information stored in the display memory to a display apparatus, wherein the first storage step and the output step are independently executed.

It is the second object of the present invention to provide a document reading apparatus and method, which can cope with display apparatuses of different standards such as VGA, SVGA, XGA, and the like, and have a resolution high enough to read and output characters of a text document or the like by utilizing a feature of a high-quality display apparatus.

According to the present invention, the foregoing second object is attained by providing a document reading apparatus comprising: reading means for reading image information of a document using an image sensor; output means for converting the image information read by said reading means into image data of predetermined format, and outputting the image data to an external display apparatus; display performance acquisition means for acquiring display performance of the external display apparatus; and setting means for setting a read condition of said reading means and/or an output condition of said output means in accordance with the display performance of the external display apparatus.

Further, the foregoing second object is also attained by providing a document reading method comprising: the reading step of reading image information of a document using an image sensor; the output step of converting the image information read in the reading step into image data of predetermined format, and outputting the image data to an external display apparatus; the display performance acquisition step of acquiring display performance of the external display apparatus; and the setting step of setting a read condition in the reading step and/or an output condition in the output step in accordance with the display performance of the external display apparatus.

It is the third object of the present invention to provide a document reading apparatus and method, which can shorten the time required until a document image is displayed and can instantaneously re-display a document image without re-reading to render it again by storing previous image data, upon receiving a document display request.

According to the present invention, the foregoing third object is attained by providing a document reading apparatus comprising: reading means, having a linear image sensor, for reading image information of a document; sub-scan means for changing a relative position between said reading means and a document image at a predetermined speed in a direction perpendicular to a main scan direction of the linear image sensor; an A/D converter for converting the image information from said reading means into digital image data; a memory for storing the image data from said A/D converter, and capable of simultaneously storing image data which is being displayed by a display means and image data before display; and output means for outputting the image data stored in said memory to the display apparatus.

Further, the foregoing third object is also attained by providing a document reading method comprising: the reading step of reading image information of a document using a linear image sensor; the first storage step of at least temporarily storing the image information read in the reading step in a memory; the output step of outputting the image information stored in the memory to a display apparatus; and the second storage step of storing image information, which is being displayed by the display apparatus, in the memory.

It is the fourth object of the present invention to reduce moiré generated upon reading a document image and outputting its image signal to the display apparatus.

According to the present invention, the foregoing fourth object is attained by providing a document reading apparatus comprising: image reading means for reading a document image; output means for outputting an image signal of the document image read by said image reading means to a display apparatus; read condition setting means for setting a read condition of said image reading means in accordance with display performance of the display apparatus; and first moiré reduction process means for executing a moiré reduction process for the image signal of the document image read by said image reading means.

Further, the foregoing fourth object is also attained by providing a document reading method for reading a document image by image reading means, and outputting an image signal of the read document image to a display apparatus, comprising: the setting step of setting a read condition of the image reading means in accordance with display performance of the display apparatus; and the first moiré reduction process step of executing a moire reduction process for the image signal of the document image read by the image reading means.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the arrangement of a document reading apparatus according to the first embodiment of the present invention;
Fig. 2 is a schematic sectional view showing the mechanical structure of the document reading apparatus of the present invention;
Fig. 3 is a flow chart showing the processing sequence after start in the document reading apparatus according to the first embodiment of the present invention;
Fig. 4 is a flow chart showing the document reading processing sequence in the document reading apparatus according to the first embodiment of the present invention;
Fig. 5 is a flow chart showing the document exhaust processing sequence in the document reading apparatus according to the first embodiment of the present invention;
Fig. 6 is a flow chart showing the new document display processing sequence in the document reading apparatus according to the first embodiment of the present invention;
Fig. 7 is a flow chart showing the processing sequence upon data transfer to a second buffer memory and that to a display memory in the document reading apparatus according to the first embodiment of the present invention;
Fig. 8 is a flow chart showing the rotation display processing sequence in the document reading apparatus according to the first embodiment of the present invention;
Fig. 9 is a flow chart showing the displayed document re-display processing sequence in the document reading apparatus according to the first embodiment of the present invention;
Fig. 10 is a flow chart showing the processing sequence after start in a document reading apparatus according to the second embodiment of the present invention;
Fig. 11 is a flow chart showing the display performance information select processing sequence in the document reading apparatus according to the second embodiment of the present invention;
Fig. 12 is a flow chart showing the processing sequence for determining the read resolution in a document reading apparatus according to the third embodiment of the present invention;
Fig. 13 is a schematic view showing the overall arrangement of a system according to the fourth embodiment of the present invention;
Fig. 14 is a block diagram showing the internal arrangement of a user terminal apparatus in a system according to the sixth embodiment of the present invention, which displays on a display apparatus a document image read by a document reading apparatus via a personal computer;
Fig. 15 is a block diagram showing the arrangement of a document reading apparatus according to the seventh embodiment of the present invention;
Fig. 16 is a flow chart showing the processing sequence after start in the document reading apparatus according to the seventh embodiment of the present invention;
Fig. 17 is a flow chart showing the document reading processing sequence in the document reading apparatus according to the seventh embodiment of the present invention;
Fig. 18 is a flow chart showing the processing sequence for displaying the previous page of a document in the document reading apparatus according to the seventh embodiment of the present invention;
Fig. 19 is a flow chart showing the processing sequence for displaying the previous page of a document in the document reading apparatus according to the seventh embodiment of the present invention;
Figs. 20A to 20M show images of use examples of a buffer memory in the document reading apparatus according to the seventh embodiment of the present invention;
Fig. 21 is a block diagram showing the arrangement of a document reading apparatus and display apparatus in the eighth embodiment;
Fig. 22 is a flow chart showing a moiré reduction process upon reading a document image;
Fig. 23 is a flow chart showing a moiré reduction process upon outputting image data to a display apparatus;
Fig. 24 is a side view showing the structure of a conventional document reading apparatus using an area image sensor; and
Fig. 25 is a block diagram showing the arrangement of a conventional document reading apparatus using a linear image sensor.

### DETAILED DESCRIPTION OF THE PREFERRED EMBODIMENTS

Preferred embodiments of the present invention will be described in detail in accordance with the accompanying drawings.

### [First Embodiment]

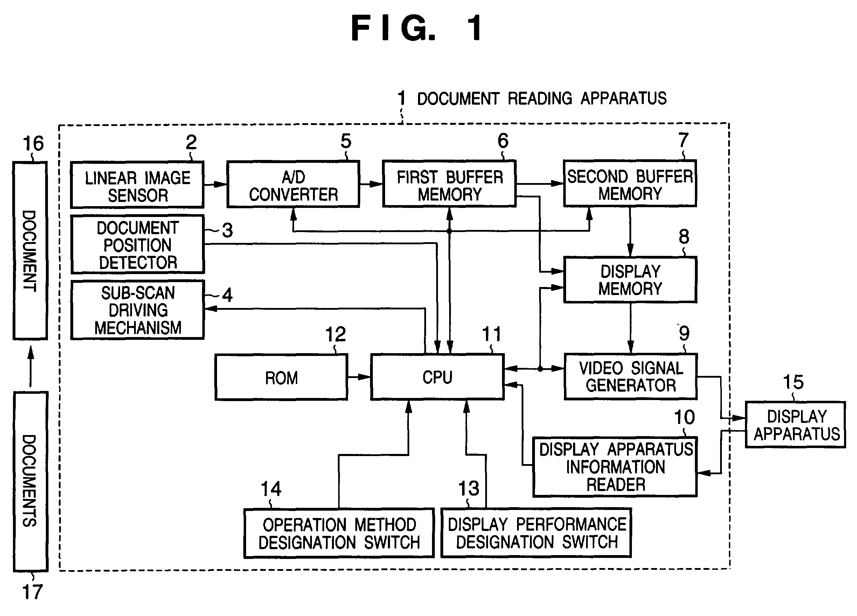

Fig. 1 is a block diagram showing the arrangement of a document reading apparatus according to the first embodiment of the present invention.

Referring to Fig. 1, reference numeral 1 denotes a document reading apparatus; 2, a linear image sensor; 3, a document position detector; 4, a sub-scan driving mechanism which serves both as a sub-scan driving mechanism and document feeding mechanism; 5, an A/D converter; 6, a first buffer memory for temporarily storing document information, which has been read by the linear image sensor 2 and converted into digital data by the A/D converter 5, before it is displayed by a display apparatus via a display memory 8 (to be described later); 7, a second buffer memory for storing compressed data which are being displayed and/or were displayed; 8, a display memory; 9, a video signal generator for converting data written in the display memory 8 into a video signal and outputting the video signal as needed; 10, a display apparatus information reader; 11, a CPU for controlling the operation of the overall apparatus; 12, a ROM for storing a control program and control data used by the CPU 11; 13, a display performance designation switch; 14, an operation method designation switch; 15, a display apparatus such as a liquid crystal projector or the like; 16, a document to be read by the apparatus of this embodiment; and 17, a plurality of documents stacked on a document tray 18 (to be described later).

The first and second buffer memories 6 and 7 may comprise semiconductor memories, but may use nonvolatile memory devices such as hard disks together. In the document reading apparatus 1 of the first embodiment, data stored in the first buffer memory 6 does not undergo any compression/expansion, but only data stored in the second buffer memory 7 undergoes a compression/expansion process. The size of the first buffer memory 6 may be either larger or smaller than that of one document, but when the size of the first buffer memory 6 is larger than that of one document and the memory 6 can store data for one or more documents, since the image to be displayed can be switched without any actual reading process, a switching time equivalent to that of the apparatus using an area sensor can be realized.

Even when the size of the first buffer memory 6 is smaller than that of one document, the time required until an image is ready for display can he shortened according to the size. Assume that the document reading apparatus 1 of the first embodiment mounts a memory having a size larger than that of one document. The size of the second buffer memory 7 need only be larger than that of one document. Assume that the document reading apparatus 1 of the first embodiment mounts a memory having a size larger than that for two documents, and when it is checked if a free space is available in the first and second buffer memories 6 and 7, it is determined that no free space is available if the free space is smaller than the size required for storing data for one document.

The CPU 11 also has functions as first transfer means for transferring data from the A/D converter 5 to the first buffer memory 6, second transfer means for transferring data from the first buffer memory 6 to the second buffer memory 7, and third transfer means for converting data from the first or second buffer memory 6 or 7 into a predetermined display format, and transferring that data to the display memory 8.

The operation method designation switch 14 comprises a document set detector 19 (to be described later), and a remote-control switch (not shown) which allows remote operations by means of infrared rays. The remote-control switch can issue operation instructions such as new document display, rotation display, re-display, and the like by pressing buttons thereon.

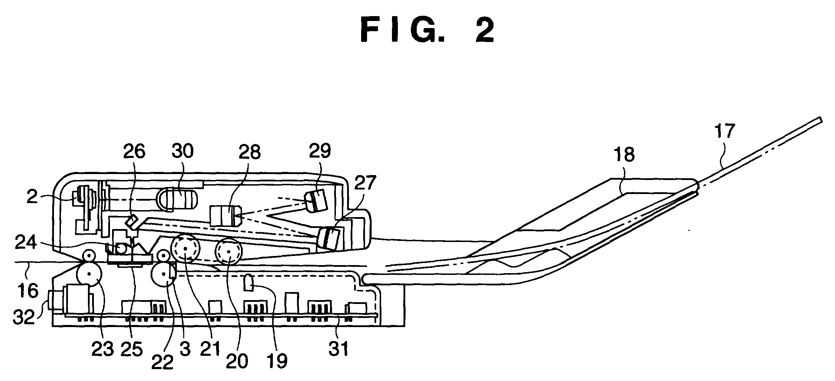

Fig. 2 is a sectional view showing the mechanical structure of the document reading apparatus 1 of the first embodiment.

Referring to Fig. 2, reference numeral 16 denotes a document, reading of which is underway; 17, documents stacked on the document tray 18 (to be described below); 18, a document tray; 19, a document set detector as a part of the operation method designation switch; 20, a paper feed roller as a part of the sub-scan driving mechanism 4; 21, a separation roller as a part of the sub-scan driving mechanism 4; 22, a main roller as a part of the sub-scan driving mechanism 4; 23, an exhaust roller as a part of the sub-scan driving mechanism 4; 24, a light source for illuminating the document 16 which is being read; 25, a white plate; 26, a first mirror; 27, a second mirror; 28, a third mirror; 29, a fourth mirror; 30, a lens; 31, a main control board which mounts principal control circuit components such as the A/D converter 5, first buffer memory 6, second buffer memory 7, display memory 8, video signal generator 9, display apparatus information reader 10, CPU 11, ROM 12, and the like; and 32, a display apparatus connector which is mounted on the main control board 31, and connects the video signal generator 9 and the display apparatus information reader 10 to the display apparatus 15.

The paper feed roller 20 and separation roller 21 are driving rollers as the document feeding mechanism for feeding one document 16 of the documents 17 stacked on the document tray 18 from the document tray 18 to a document reader (not shown), and the main roller 22 and exhaust roller 23 are driving rollers of the sub-scan driving mechanism for making a sub-scan that moves the document 16 relative to the linear image sensor 2.

These two mechanisms must be independently driven. In the apparatus of this embodiment, switching of the rotational direction of a motor as a power source and a clutch are combined to independently drive two mechanisms using a driving device.

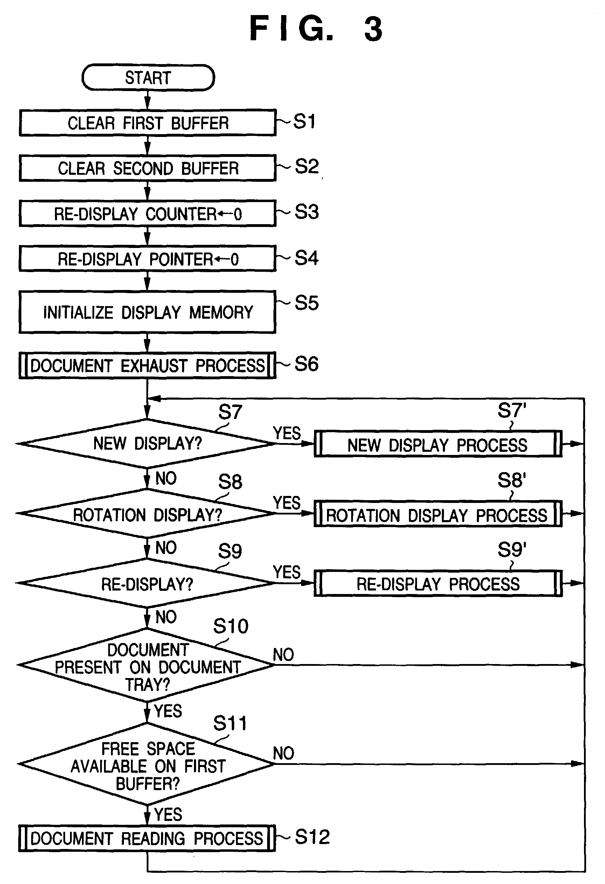

Fig. 3 is a flow chart showing the processing sequence after start of the document reading apparatus 1 of the first embodiment.

First, internal variables and mechanisms are initialized. As initialization that especially pertains to the present invention, the first and second buffer memories 6 and 7 are cleared (steps S1 and S2), a re-display counter and pointer (to be described later) are reset to zero (steps S3 and S4), and the display memory 8 is initialized (step S5). Furthermore, to cope with a case wherein a document 16, reading of which is not complete, stays in the document reading apparatus 1, a document exhaust process is done (step S6). After that, the control enters a loop process that waits for an instruction by the operation method designation switch 14 (steps S7 to S12).

Note that the display memory 8 is initialized in step S5 not by full black or white data but by data which is read out from the ROM 12 or is obtained by computation of the CPU 11, and can confirm connection between the document reading apparatus 1 and display apparatus 15 and operation of the document reading apparatus 1 to adjust the screen size, image quality, and the like.

The re-display counter is a variable that indicates the number of pieces of document information stored in the second buffer memory 7. The re-display pointer is a variable that indicates document information transferred to the display memory 8 of those stored in the second buffer memory 7. When the re-display pointer is "0", it indicates the document information that has been read most recently; every time the value is incremented by 1, it indicates older document information in turn.

If no operation instruction such as new document display, rotation display, re-display, or the like is input by the remote-control switch (not shown) (NO in steps S7 to S9), and the document set detector 19 detects that a document 16 is set on the document tray 18 (YES in step S10), documents are successively read as long as a free space is available on the first buffer memory 6 (while YES in step S11), and as long as documents 17 to be read are stacked on the document tray 18 (while YES in step S10).

On the other hand, if an operation instruction is issued upon depression of a button on the remote-control switch, a new document display process (steps S7 and S7'), a rotation display process (steps S8 and S8'), or a re-display process (steps S9 and S9') is done in accordance with the instruction contents.

In the first embodiment, if the documents 17 stacked on the document tray 18 are detected by the document set detector 19 (YES in step S10), and a free space is available on the first buffer memory 6 (YES in step S11), reading of each document 17 is immediately started. Alternatively, successive reading of documents 17 stacked on the document tray 18 may be started in response to the new document display instruction.

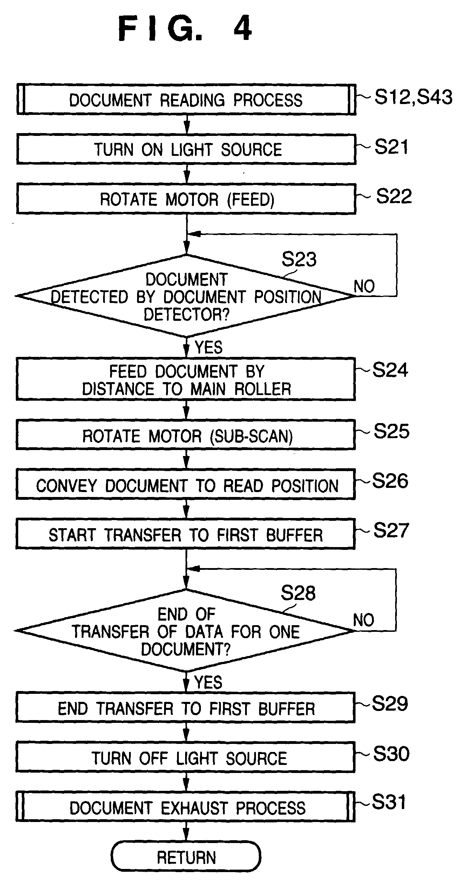

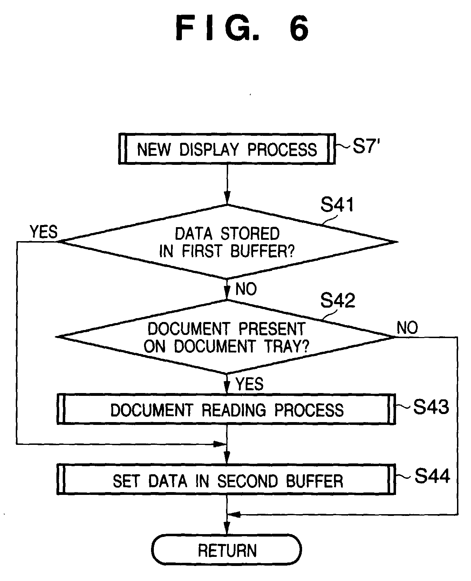

Fig. 4 is a flow chart showing the document reading processing sequence in the document reading apparatus 1 of the first embodiment, which is done in step S12 in Fig. 3 or step S43 in Fig. 6 (to be described later).

The CPU 11 turns on the light source 24 (step S21), and rotates the motor (step S22) to drive the paper feed roller 20 and separation roller 21 for feeding a document, thus feeding one document 16 of the documents 17 stacked on the document tray 18 (step S23). At this time, the CPU 11 continues to feed until the document 16 reaches the main roller 22 (step S24) by computing a feed distance based on the timing at which the leading end of the document 16 has reached the document position detector 3 (YES in step S23).

In order to start the sub-scan convey operation when the document 16 has reached the main roller 22, the CPU 11 stops driving of the paper feed roller 20 and separation roller 21 and starts that of the main roller 22 and exhaust roller 23 for sub-scan (step S25). When the document has reached the document read position on the white plate 25 (step S26), the CPU 11 starts data transfer from the A/D converter 5 to the first buffer memory 6 (step S27). The CPU 11 ends data transfer (step S29) when data for one document has been transferred (YES in step S28). The CPU 11 then turns off the light source 24 (step S30), executes a document exhaust process (step S31), and stops the motor.

The reading operation will be explained in detail below. When the document 16 has reached the read position on the white plate 25, light emitted by the light source 24 is reflected by the surface of the document 16 when the document 16 is a reflecting document or by the surface of the document 16 and the plate surface of the white plate 25 when the document 16 is a transmission document, in accordance with image information on the document 16, and is read by the linear image sensor 2 via the first mirror 26, second mirror 27, third mirror 28, fourth mirror 29, and lens 30. The CPU 11 detects by computation a timing at which the document 16 leaves the read position on the white plate 25, thus recognizing if reading of the document 16 is complete. The image information on the document 16 read by the linear sensor 2 is converted into digital data by the A/D converter 5, undergoes image processes such as grayscale conversion, edge emphasis, and the like as needed, and the processed information is stored in the first buffer memory 6.

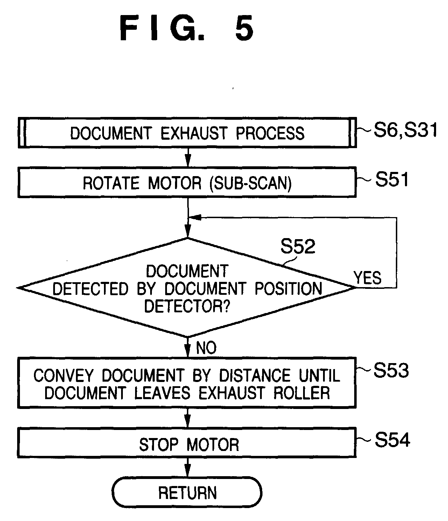

Fig. 5 is a flow chart showing the document exhaust processing sequence in the document reading apparatus 1 of the first embodiment, which is done in step S6 in Fig. 3 or step S31 in Fig. 4.

The CPU 11 rotates the motor in the sub-scan direction (step S51) to drive the main roller 22 and exhaust roller 23 for sub-scan. When the document position detector 3 detects the presence of a document 16 (step S52), the CPU 11 waits until the trailing end of the document 16 passes by the document position detector 3. The CPU 11 drives the motor for a time, which is required for the document 16 to reliably leave the discharge roller 23 and is computed based on the timing at which the trailing end of the document 16 has passed by the document position sensor 3 (step S53), and stops the motor (step S54) when the document 16 has left the roller 23. If the document position detector 3 cannot detect the document 16 (step S52), the CPU 11 estimates that the trailing end of the document 16 has just passed by the document position detector 3, and drives the motor for a time which is required for the document 16 to reliably leave the discharge roller 23 and is computed based on that timing (step S53). The CPU 11 then stops the motor when the document 16 has left the roller 23 (step S54).

Fig. 6 is a flow chart showing the new document display processing sequence in the document reading apparatus 1 of the first embodiment, which is done in step S7' in Fig. 3.

The CPU 11 checks if data is stored in the first buffer memory 6 (step S41). If data is stored, step S44 uses the data in the first buffer memory 6.

On the other hand, if no data is stored in the first buffer memory 6, it is checked if documents 17 are stacked on the document tray 18 (step S42). If documents are found, the document reading process is executed in the sequence shown in Fig. 4 (step S43). In step S44, the data in the first buffer memory 6 confirmed in step S41 or data newly stored in the first buffer memory 6 in step S43 is set in the second buffer memory 7. If no data is stored in the first buffer memory 6 (NO in step S41) and no document 17 is stacked on the document tray 18 (NO in step S42), the CPU 11 ignores the new document display instruction.

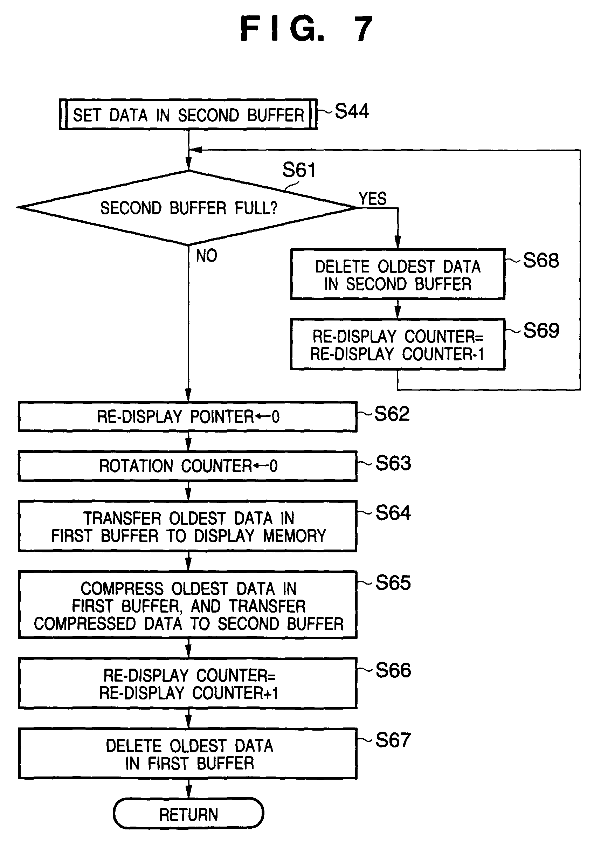

Fig. 7 is a flow chart showing the processing sequence of data transfer to the second buffer memory 7 and that to the display memory 8 in the document reading apparatus 1 of the first embodiment, which is done in step S44 in Fig. 6.

The CPU 11 checks if a free space is available on the second buffer memory 7 (step S61). If no free space is available (if the memory is full of data), the CPU 11 deletes the oldest data in the second buffer memory 7 therefrom (step S68), decrements the re-display counter (step S69), and returns to the process for checking if a free space is available on the second buffer memory 7. This process is done since data in the second buffer memory 7 is compressed, it is not certain if data for another document can be stored even after the data for one image is deleted.

When a free space is assured on the second buffer memory 7, the re-display pointer and a rotation counter are reset to zero (steps S62 and S63). The rotation counter is a variable indicating the rotational angle through which an image in the display memory 8 is rotated with respect to source data in the second buffer memory 7. When the value in the rotation counter is n, it indicates that an image is rotated through 90° × n (where n is an integer value ranging from 0 to 3). Hence, when both the re-display pointer and rotation counter are reset to zero, they indicate that image data in the display memory 8 is the latest one in the second buffer memory 7, and has the same orientation as that of the source data since it is not rotated.

Subsequently, the CPU 11 executes image processes such as resolution conversion, grayscale conversion, edge emphasis, and the like of the oldest data in the first buffer memory 6 as needed, and transfers that data to the display memory 8 (step S64). Then, the CPU 11 compresses the oldest data in the first buffer memory 6, transfers it to the free space of the second buffer memory 7 (step S65), increments the aforementioned re-display counter (step S66), and deletes the oldest data that has been transferred from the first buffer memory 6 (step 67). The reason why data not in the second buffer memory 7 but in the first buffer memory 6 is directly transferred to the display memory 8 is to prevent an unnecessary expansion process of data.

The data transferred to the display memory 8 is converted into a video signal by the video signal generator 9, and is output to and displayed by the display apparatus 15 via the display apparatus connector 32.

As a video signal to be generated by the video signal generator 9, analog R, G, and B signals, which is used in personal computers, are prevalently used. Alternatively, data may be transferred as a digital signal specified in DFP (Digital Flat Panel Standard), IEEE1394, or the like as long as that signal can be directly connected to the display apparatus 15 and can inform the display apparatus 15 of a change in data in the display memory 8 to reflect it in the displayed contents.

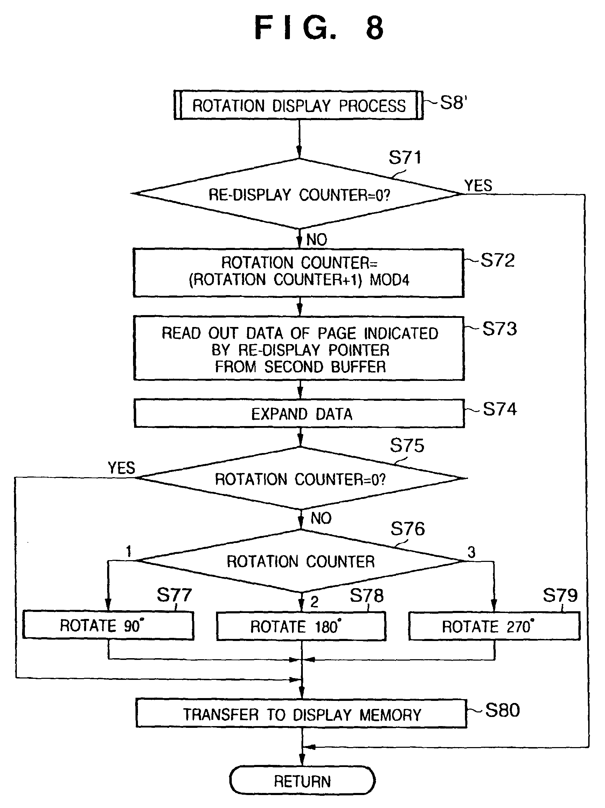

Fig. 8 is a flow chart showing the rotation display processing sequence of a document image that is being displayed in the document reading apparatus 1 of the first embodiment, which is done in step S8' in Fig. 3.

The CPU 11 checks if the value of the re-display counter is zero (step S71). If the value of the re-display counter is zero, it indicates that no data is stored in the second buffer memory, and document read data is not displayed yet. In this case, the CPU 11 ignores the rotation display instruction. If the value of the re-display counter is other than zero, the CPU 11 increments the rotation counter and then computes modulo 4 (MOD4) (step S72) to obtain the value of the rotation counter that indicates the rotational angle through which the image is to be rotated currently. As a result of this modulo computation, a 360° instruction can be reset to a 0° instruction.

Subsequently, the CPU 11 reads out and expands (steps S73 and S74) data in the second buffer memory 7, which is indicated by the re-display pointer, and rotates the expanded data in accordance with the value of the rotation counter (steps S75 to S79). The CPU 11 executes image processes such as resolution conversion, grayscale conversion, edge emphasis, and the like of the rotated data as needed, and transfers it to the display memory 8 (step S80).

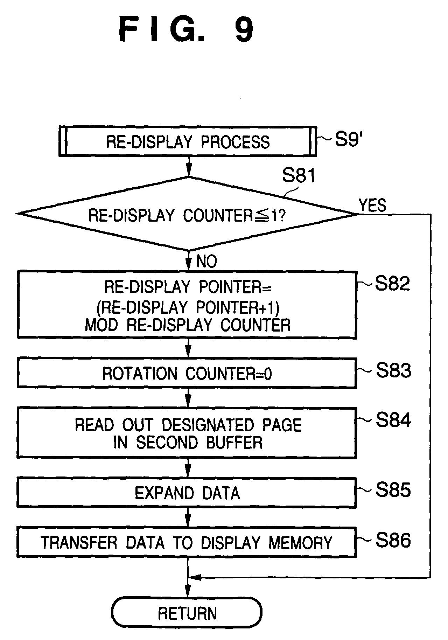

Fig. 9 is a flow chart showing the re-display processing sequence of the displayed document in the document reading apparatus 1 of the first embodiment, which is done in step S9' in Fig. 3.

The CPU 11 checks if the value of the re-display counter is equal to or smaller than 1 (step S81). If the value of the re-display counter is equal to or smaller than 1, it indicates that no data is stored in the second buffer memory 7, or only one image is stored, and the document read data is not displayed yet or only data which is transferred to the display memory 8 and is displayed currently is stored in the second buffer memory 7, and the CPU 11 ignores the re-display instruction.

If the value of the re-display counter is equal to or larger than 2, the CPU 11 increments the re-display pointer and makes a modulo computation using the value of the re-display counter (step S82) to obtain the value of the re-display pointer which points to data to be displayed currently in the second buffer memory 7. With this modulo computation, data having a re-display order next to the oldest data can be set to be the latest data.

Subsequently, the CPU 11 resets the value of the rotation counter to zero (step S83), and reads out and expands data indicated by the re-display pointer in the second buffer memory 7 (steps S84 and S85). The CPU 11 executes image processes such as resolution conversion, grayscale conversion, edge emphasis, and the like of that data as needed, and transfers the data to the display memory 8 (step S86).

As described above, according to the first embodiment, a process from when a document image is read until image data is transferred to the first buffer memory 6, and a process for outputting image data in the display memory 8 from the video signal generator 9 are independently executed. In this manner, a compact, inexpensive document reading apparatus which has a resolution high enough to read and output characters of a text document or the like, can read the next document during display of a document image to shorten the display switching time, can obviate the need for any display pre-process, and can simultaneously handle many documents, is realized.

Even when image information of the already displayed document is to be re-displayed on the display apparatus, images can be switched at high speed without requiring any re-read process. Also, even when a given image repetitively undergoes a conversion process such as rotation or the like, a high-quality image which is free from any deterioration due to repetition can be displayed.

Even when the buffer memory size is small, a large number of documents can be simultaneously set, and can be read and displayed successively.

Since different mechanisms can be driven by a driving device, a compact, lightweight, inexpensive document reading apparatus can be provided.

Even when the buffer memory size is small, since read document data is held after it is compressed, a large number of pieces of document information can be stored, and the re-read probability can be reduced.

Since a presenter can easily switch and convert displayed images at arbitrary timings without requiring any assisting person who changes documents, smooth, effective presentation can be made without disturbing the flow of explanation.

Note that the sub-scan driving mechanism 4 moves the document 16 relative to the linear image sensor 2. Alternatively, the mechanism 4 may move the linear image sensor 2 relative to the document 16.

The first embodiment comprises the first buffer memory 6 which stores image data read by the linear image sensor 2 without compressing it, and the second buffer memory 7 which stores compressed image data. However, the present invention is not limited to such specific arrangement. For example, only one buffer memory may be used to compress and save image data read by the linear image sensor 2, the data may be expanded when it is transferred from the buffer memory to the display memory 8, and the image data may be held in the buffer memory even after transfer.

### [Second Embodiment]

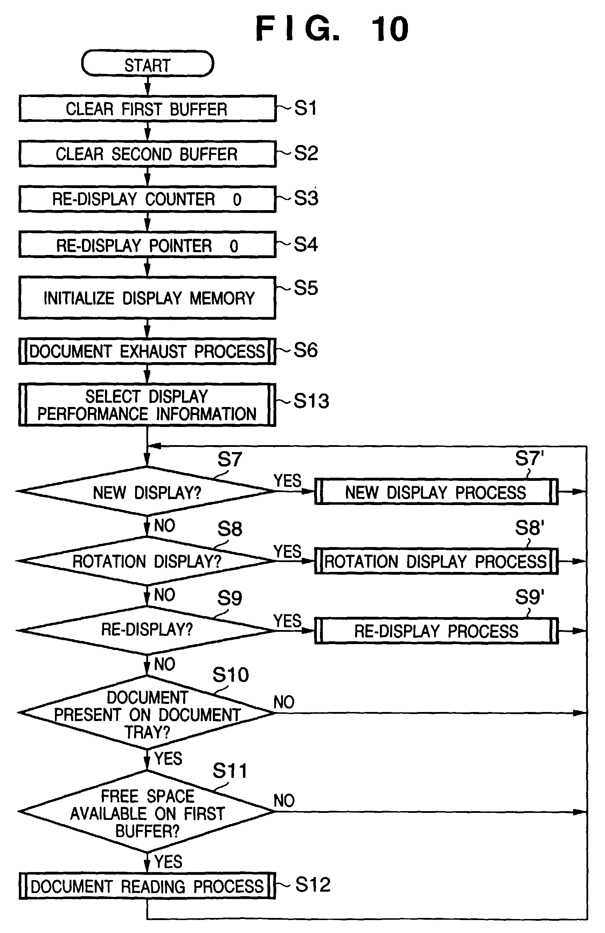

A document reading apparatus of the second embodiment is characterized in that display information that pertains to the document reading apparatus can be selected as needed in correspondence with the display apparatus connected thereto. This operation is done as a part of initialization in step S13 in Fig. 10 after the document reading apparatus is started. Note that other processes which are the same as those in Fig. 3 are denoted by the same step numbers, and a description thereof will be omitted.

Since the arrangement of the document reading apparatus is the same as that which has been explained in the first embodiment with reference to Figs. 1 and 2, a detailed description thereof will be omitted.

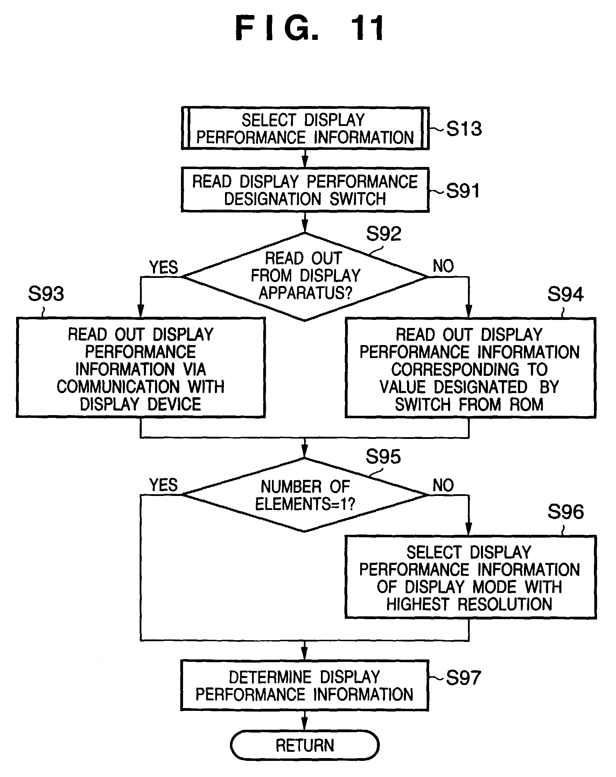

Fig. 11 is a flow chart showing the display performance information selection method in the second embodiment.

In order to determine the display performance such as a resolution or the like of a video signal to be output to the display apparatus 15 connected, the CPU 11 reads information of the display performance designation switch 13 (step S91). If the read information indicates a specific value, i.e., if an automatic setup mode is selected, display performance information in the display apparatus 15 connected is read out via the display apparatus information reader 10 (steps S92 and S93); otherwise, i.e., if a manual setup mode is selected, one of pieces of display performance information stored in the ROM 12, which corresponds to the value of the read information is selected (step S94). If the readout display performance information of the display apparatus 15 contains only one element (YES in step S95), the information obtained in step S93 or S94 is determined as display performance information (step S97); if the readout display performance information contains a plurality of elements (NO in step S95), a display performance information element which indicates a display mode with the highest resolution of those with which the video signal generator 9 is compatible is selected (step S96), thus determining display performance information (step S97).

The display performance information is in a data format such as EDID (Extended Display Identification Data) or the like, and may be read out from the display apparatus 15 based on, e.g., DDC (Display Data Channel).

When a document read start instruction is sent from the operation method designation switch 14 to the CPU 11, the operation method such as the read resolution, the number of read gray levels, the read pattern, the read position, and the like of the document is determined on the basis of the instruction from the operation method designation switch 14 and the display performance information. The document read start instruction method by the operation method designation switch 14 may be a manual one, or may be based on means such as the document set detector 19 for detecting if documents are set on the document tray 18, or such means may be combined.

According to the aforementioned arrangement, image information of a document can be read under the condition corresponding to the performance of the display apparatus, and image data can be output.

### [Third Embodiment]

A method of determining the resolution as a display performance method will be explained in detail below. In the second embodiment, the display performance information obtained in step S93 or S94 or its element is determined as the display performance information used upon reading out image information of a document. However, in the third embodiment, a condition upon reading out image information is determined based on the display performance method determined in step S97, especially, the resolution.

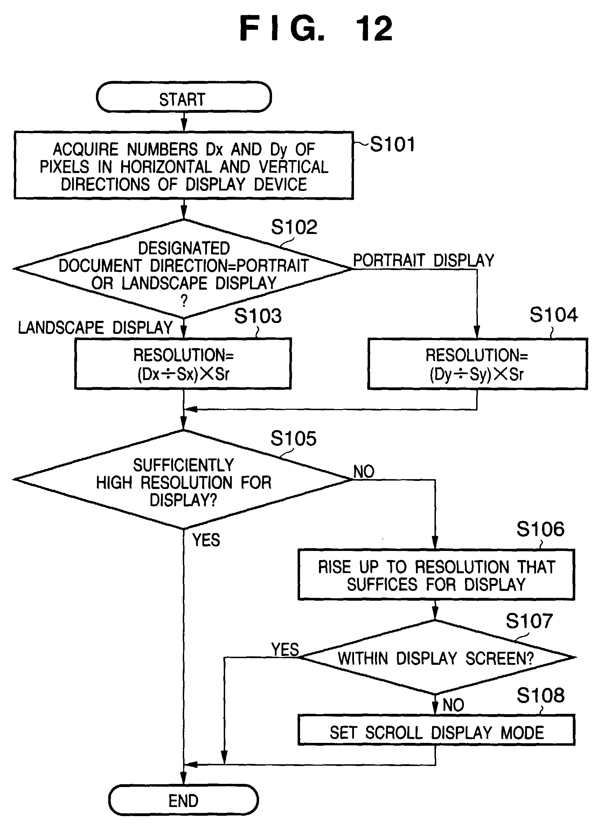

Fig. 12 is a flow chart showing the read resolution determination processing sequence.

Let Dx be the number of pixels in the horizontal direction of the display apparatus 15, Dy be the number of pixels in the vertical direction of the display apparatus 15, Sx be the number of pixels of a standard document size (e.g., A4) in the horizontal direction at the basic resolution of the document reading apparatus 1, Sy be the number of pixels of a standard document size (e.g., A4) in the vertical direction at the basic resolution of the document reading apparatus 1, and Sr be the basic resolution of the document reading apparatus 1.

The document reading apparatus 1 acquires the numbers Dx and Dy of pixels in the horizontal and vertical directions, respectively, of the display apparatus 15 (step S101). This information is based on the display performance information determined in step S97 in Fig. 11, as described above.

The document reading apparatus 1 then determines the document size and direction (landscape or portrait) by detecting the state of the operation method designation switch 14 operated by the operator (step S102), and computes the resolution based on the designated document size and direction (steps S103 and S104).

Equations for obtaining the resolution when a document with a standard document size (e.g.: A4) is displayed to fill the display area of the display apparatus 15 depending on the display direction are:
for landscape display: resolution = (Dx/Sx) × Sr (step S103).
for portrait display: resolution = (Dy/Sy) x Sr (step S104).

It is checked if the resolution computed in step S103 or S104 suffices for display (step S105). If the resolution does not suffice for display, the resolution is raised until it suffices for display (step S106). If the resolution becomes high, and an image cannot fall within the display screen by single display (NO in step S107), a scroll display mode is set (step S108).

The document reading apparatus 1 may automatically set the document size by computing it based on the document guide position, the number of paper feed steps, and the like. Alternatively, the document reading apparatus 1 may detect marks on the document 16 to obtain information such as the document size, direction, desired resolution, and the like.

Furthermore, the document reading apparatus 1 may detect a specific character (e.g., "A") or numeral on a document, and may automatically execute a process for setting the resolution, rotating an image, and so forth on the basis of the size and direction of that character.

Moreover, when the document reading apparatus 1 determines based on marks or a specific character on the document 16 that the resolution of the read image data is too high, it may compress image data.

In addition, the document reading apparatus 1 may be provided with a function of automatically detecting and deleting a blank portion of a document, and may automatically adjust the resolution for image data from which the blank portion is deleted.

As described above, according to the third embodiment, a document reading apparatus which can cope with display apparatuses with different standards such as VGA, SVGA, XGA, and the like, and has a resolution high enough to read and output characters of a text document or the like by utilizing a feature of a high-quality display apparatus is realized.

### [Fourth Embodiment]

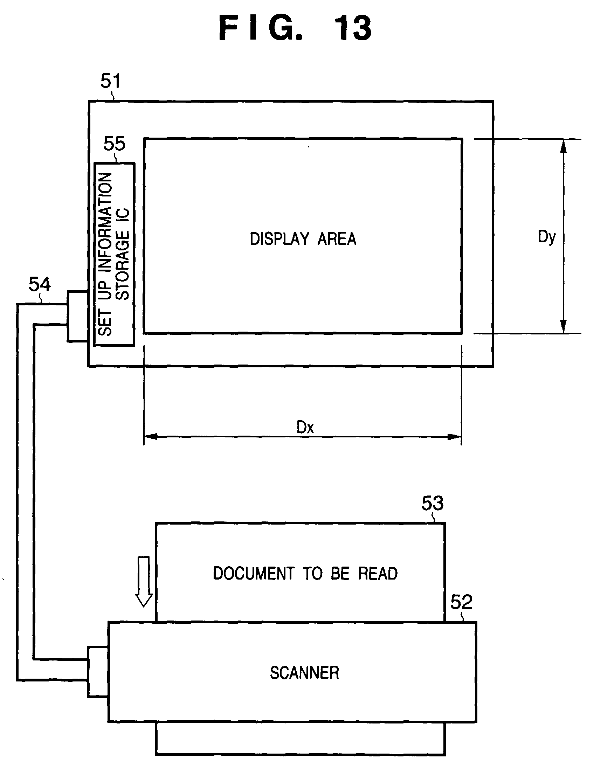

Fig. 13 is a schematic view showing the overall arrangement of a document reading apparatus and display apparatus in the fourth embodiment. Referring to Fig. 13, reference numeral 51 denotes a display apparatus connected; 52, a scanner; 55, a setup information storage IC in the display apparatus 51; 54, a connection cable; and 53, a document to he read.

This embodiment allows adjustment of the resolution by the scanner alone without the intervention of a personal computer or the like.

Setup information is acquired from the setup information storage IC 55 in the display apparatus 55 connected to the scanner via the monitor cable 54 so as to set various display parameters, and to automatically set the read resolution as in the second embodiment. Note that various display parameters include the numbers of pixels in the vertical and horizontal directions, signal timings, and the like of the display apparatus 51.

When the display performance of the display apparatus 51 is insufficient for image data, a scroll image display mode may be automatically selected.

In this case, the process from when a document is read until image data is transferred to the buffer memory, and the process for outputting image data of the display memory from the video signal generator are independently done as in the first embodiment. In this manner, a compact, inexpensive document reading apparatus which has a resolution high enough to read and output characters of a text document or the like, can read the next document during explanation of the displayed image to shorten the display switching time, can obviate the need for any display pre-process, and can simultaneously handle many documents, is realized.

Furthermore, according to this embodiment, a document reading apparatus which can cope with display apparatuses with different standards such as VGA, SVGA, XGA, and the like, and has a resolution high enough to read and output characters of a text document or the like by utilizing a feature of a high-quality display apparatus is realized.

### [Fifth Embodiment]

In the second or third embodiment, the document reading apparatus 1 is prepared as an independent apparatus which is connected to the display apparatus 15. Alternatively, an integrated document reading apparatus in which a document reading apparatus 1 is built in as a sub unit in the housing of a display apparatus 15 may be prepared.

In this case, the process from when a document is read until image data is transferred to the buffer memory, and the process for outputting image data of the display memory from the video signal generator are independently done as in the first embodiment. In this manner, a compact, inexpensive document reading apparatus which has a resolution high enough to read and output characters of a text document or the like, can read the next document during explanation of the displayed image to shorten the display switching time, can obviate the need for any display pre-process, and can simultaneously handle many documents, is realized.

Furthermore, according to this embodiment, a document reading apparatus which can cope with display apparatuses with different standards such as VGA, SVGA, XGA, and the like, and has a resolution high enough to read and output characters of a text document or the like by utilizing a feature of a high-quality display apparatus is realized.

Also, the resolution can be adjusted by the scanner alone without the intervention of a personal computer or the like.

### [Sixth Embodiment]

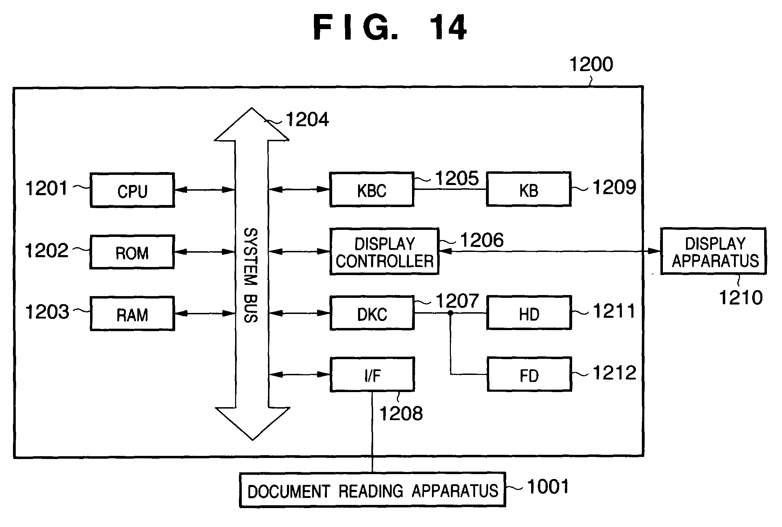

Fig. 14 is a block diagram showing a system for displaying a document image read by a document reading apparatus on a display apparatus via a personal computer.

Referring to Fig. 14, reference numeral 1001 denotes a document reading apparatus; 1210, a display apparatus; and 1200, a personal computer (PC). The PC 1200 comprises a CPU 1201, which systematically controls devices connected to a system bus 1204 by executing device control software stored in a ROM 1202 or hard disk (HD) 1211 or supplied from a floppy disk drive (FD) 1212.

The CPU 1201 of the PC 1200 and a program stored in the ROM 1202 or hard disk (HD) 1211 control the operations of the document reading apparatus 1001 and display apparatus 1210.

Reference numeral 1203 denotes a RAM which serves as a main memory, work area, and the like of the CPU 1201. Reference numeral 1205 denotes a keyboard controller (KBC) which controls instruction input from a keyboard (KB) 1209, another device (not shown), or the like.

Reference numeral 1206 denotes a display controller for controlling display of the external display apparatus 1210. Reference numeral 1207 denotes a disk controller (DKC) for controlling access to the hard disk (HD) 1211 and floppy disk (FD) 1212, which store a boot program (a program for initiating execution (operation) of hardware and software of the personal computer), various application programs, edit files, user files, a network management program, and the like.

Reference numeral 1208 denotes an interface for exchanging data in two ways with external apparatuses such as the document reading apparatus 1001, a printer, and the like or another PC.

According to the above arrangement, the document reading apparatus 1 and display apparatus 15 in the first to fourth embodiments can be systematically controlled by the PC.

### [Seventh Embodiment]

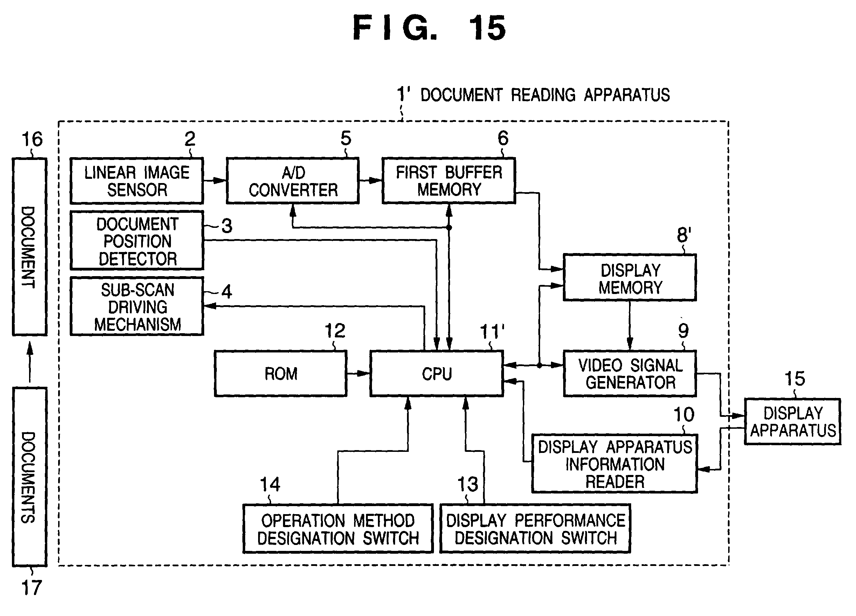

Fig. 15 is a block diagram showing the arrangement of a document reading apparatus according to the seventh embodiment of the present invention.

The arrangement shown in Fig. 15 is substantially the same as that shown in Fig. 1, except that the second buffer memory 7 is removed. Since other arrangements are the same as those in Fig. 1, the same reference numerals denote the same building components, and a detailed description thereof will be omitted. The mechanical structure of the document reading apparatus is the same as that which has been explained with reference to Fig. 2 in the first embodiment, but only one buffer memory is mounted on the main control board 30.

Referring to Fig. 15, reference numeral 1' denotes a document reading apparatus of the seventh embodiment; 6', a buffer memory for storing document information, which has been read by the linear image sensor 2 and converted into digital data by the A/D converter 5, and displaying the information on the display apparatus 15 via a display memory 8' to be described below; 8', a display memory; and 11', a CPU for controlling the operation of the overall apparatus.

The buffer memory 6' may comprise a semiconductor memory, but may additionally use a nonvolatile memory device such as a hard disk. In the apparatus of the seventh embodiment, the buffer memory 6' has a size capable of holding image data for a plurality of pages. When data for one or more documents are stored in the buffer memory 6', since images to be displayed can be switched without requiring any actual read operation, a switching time equivalent to that of the apparatus using an area sensor can be realized.

When N represents the number of pages that the buffer memory 6' can store, and P represents the number of pre-fetched pages which is assured to store image data of a new document image to be displayed, since a memory area for one display page is required to hold image data which is being displayed, the number B of old document pages that can be saved for re-display is (N - P - 1) pages. Hence, in the apparatus of the seventh embodiment, when the buffer memory 6' has a size capable of storing image data for five pages (N = 5), if a size for two document pages (P = 2) is assured as a pre-fetch memory area, a size for two pages (B = 2) can be assigned to a re-display area.

The CPU 11' also has functions as first transfer means for transferring data from the A/D converter 5 to the buffer memory 6', and second transfer means for converting data from the buffer memory 6' into a predetermined display format and transferring the converted data to the display memory 8'.

The operation method designation switch 14 comprises a document set detector 19 (to be described later), and a remote-control switch (not shown) which allows remote operations by means of infrared rays. The remote-control switch can issue a next page (next document) display instruction and previous page (previous document) display instruction by pressing buttons thereon.

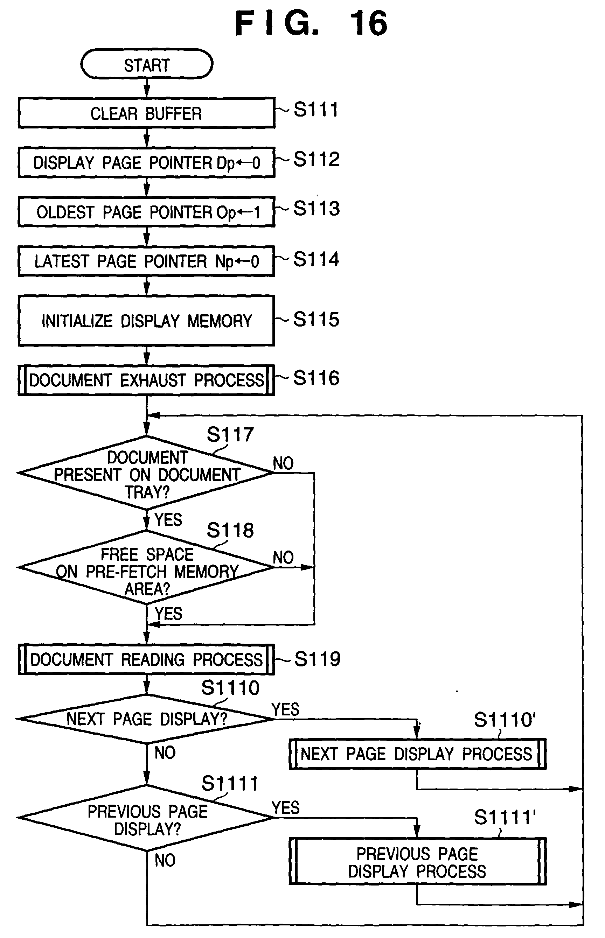

Fig. 16 is a flow chart showing the processing sequence after start of the document reading apparatus 1' of the seventh embodiment.

First, internal variables and mechanisms are initialized. As initialization that especially pertains to the present invention, the buffer memory 6' is cleared (step S111), a display page pointer Dp (to be described later) is reset to zero (step S112), an oldest page pointer (to be described later) is reset to "1" (step S113), a latest page pointer Np is reset to zero (step S114), and the display memory 8' is initialized (step S115). Furthermore, to cope with a case wherein a document 16, reading of which is not complete, stays in the document reading apparatus 1, a document exhaust process is clone (step S116). After that, the control enters a loop process that waits for an instruction by the operation method designation switch 14 (steps S117 to S1111).

Note that the display memory 8' is initialized in step S115 not by full black or white data but by data which is read out from the ROM 12 or is obtained by computation of the CPU 11', and can confirm connection between the document reading apparatus 1' and display apparatus 15 and operation of the document reading apparatus 1' to adjust the screen size, image quality, and the like.

The display page pointer Dp is a variable indicating document information transferred to the display memory 8' of those stored in the buffer memory 6'. The latest page pointer Np is a variable indicating the latest one of pieces of pre-fetched document information stored in the buffer memory 6', and the oldest page pointer Op is a variable indicating the oldest one of pieces of document information to be re-displayed stored in the buffer memory 6'.

If no operation instruction such as next page display, previous page display, or the like is input by the remote-control switch (not shown) (NO in steps S1110 to S1111), and the document set detector 19 detects that documents 17 are set on the document tray 18 (YES in step S117), documents corresponding to the number of pages to be pre-fetched are successively read as long as documents 17 to be read are stacked on the document tray 18 (while YES in step S117), and as long as a free space is available on the memory area of the buffer memory 6', which is assured for pages to be pre-fetched (while YES in step S118).

Note that the presence/absence of a free space on the memory area in step S118 can be confirmed as follows. That is, the difference between the latest page pointer Np and display page pointer Dp is computed, and if the difference is smaller than the number P of pages to be pre-fetched, it is determined that a free space is available on the memory area.

On the other hand, if an operation instruction is issued by pressing a button on the remote-control switch (not shown), a next page display process (steps S1110 and S1110') or a previous page display process (steps S1111 and S1111') is done in accordance with the instruction contents.

In the seventh embodiment, if the documents 17 stacked on the document tray 18 are detected by the document set detector 19 (YES in step S117), and a free space is available on the memory area of the buffer memory 6', which is assured for pages to be pre-fetched (YES in step S118), reading of each document 17 is immediately started. Alternatively, successive reading of documents 17 stacked on the document tray 18 may be started in response to the next page display instruction.

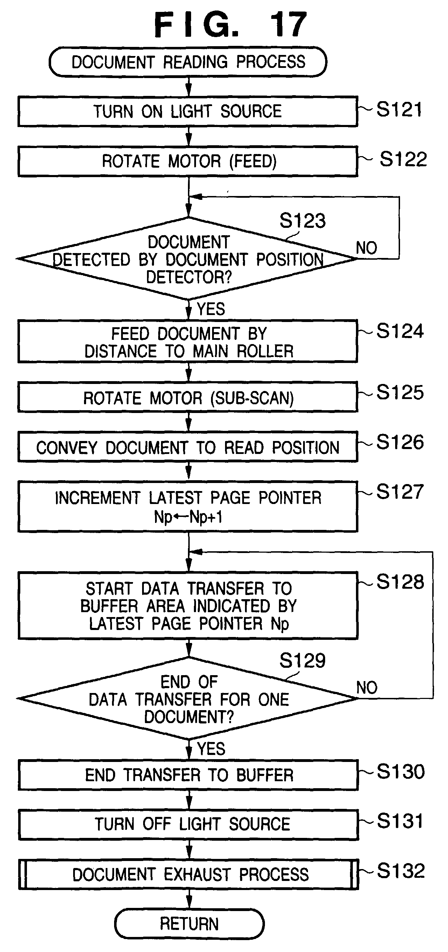

Fig. 17 is a flow chart showing the document reading processing sequence in the document reading apparatus 1' of the seventh embodiment, which is done in step S119 in Fig. 16.

The CPU 11' turns on the light source 24 (step S121), and rotates the motor (step S122) to drive the paper feed roller 20 and separation roller 21 for feeding a document, thus feeding one document 16 of the documents 17 stacked on the document tray 18 (step S123). At this time, the CPU 11' continues to feed until the document 16 reaches the main roller 22 (step S124) by computing a feed distance based on the timing at which the leading end of the document 16 has reached the document position detector 3 (YES in step S123).

In order to start the sub-scan convey operation when the document 16 has reached the main roller 22, the CPU 11' stops driving of the paper feed roller 20 and separation roller 21 and starts that of the main roller 22 and exhaust roller 23 for sub-scan (step S125). When the document has reached the document read position on the white plate 25 (step S126), the CPU 11' increments the latest page pointer Np by 1 (step S127). By incrementing the latest page pointer Np by 1 every time a document is read, the page pointer indicates a document read more recently with increasing value, and indicates a document read less recently with decreasing value.

Then, the CPU 11' starts data transfer from the A/D converter 5 to the memory area of the buffer memory 6', which is assured for pages to be pre-fetched, and is indicated by the latest page pointer Np (step S128). Upon completion of transfer of data for one document (YES in step S129), the CPU 11' ends data transfer (step S130), turns off the light source 24 (step S131), executes a document exhaust process (step S132), and stops the motor.

The reading operation will be explained in detail below. When the document 16 has reached the read position on the white plate 25, light emitted by the light source 24 is reflected by the surface of the document 16 when the document 16 is a reflecting document or by the surface of the document 16 and the plate surface of the white plate 25 when the document 16 is a transmission document, in accordance with image information on the document 16, and is read by the linear image sensor 2 via the first mirror 26, second mirror 27, third mirror 28, fourth mirror 29, and lens 30. The CPU 11' detects by computation a timing at which the document 16 leaves the read position on the white plate 25, thus recognizing if reading of the document 16 is complete. The image information on the document 16 read by the linear sensor 2 is converted into digital data by the A/D converter 5, and image data is stored in a buffer area indicated by Np after the latest page pointer Np in the buffer memory 6' is incremented by 1 (document pre-fetch function).

Since the document exhaust process done in step S116 in Fig. 16 and step S132 in Fig. 17 is the same as that which has been explained earlier with reference to Fig. 5 in the first embodiment, a detailed description thereof will be omitted.

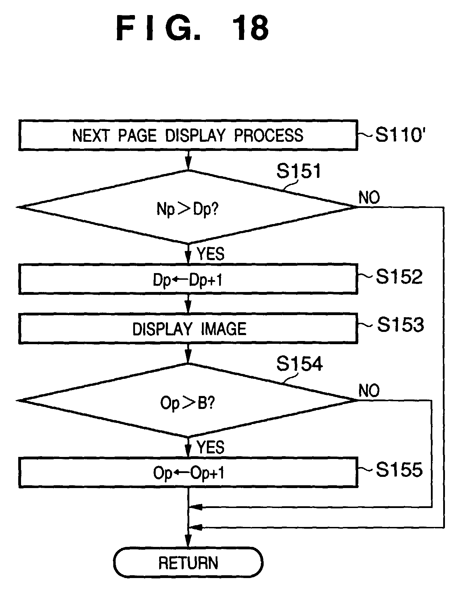

Fig. 18 is a flow chart showing the next page display processing sequence of a document in the document reading apparatus 1' of the seventh embodiment, which is done in step S1110' in Fig. 16.

The CPU 11' checks if the latest page pointer Np is larger than the display page pointer Dp. If the latest page pointer Np is equal to or smaller than the display page pointer Dp (NO in step S151), since there is no next image, the CPU 11' ignores the next page display instruction. On the other hand, if the latest page pointer Np is larger than the display page pointer Dp (YES in step S151), the CPU 11' increments the display page pointer Dp by 1 (step S152) to display data held in an area in the buffer memory 6', which is indicated by the display page pointer Dp (step S153).

When the next page process is done in step S153 and the display page pointer Dp is incremented by 1, the relationship between the display page pointer Dp and oldest page pointer Op is checked (step S154) so as to prevent the number of displayed pages from exceeding the number B of pages corresponding to an area assigned to rendering images again for re-display. That is, since the difference between the display page pointer Dp and oldest page pointer Op indicates the number of pages of displayed images, it is checked if the number of pages of displayed images falls within the number B of pages that can be rendered again assigned in the buffer memory 6' even after the display page pointer Dp is shifted.

If the difference between the display page pointer Dp and oldest page pointer Op is equal to or smaller than the number B of pages that can be rendered again (NO in step S154), since image data is stored within the assigned memory area, the process ends; otherwise, (YES in step S154), the oldest page pointer Op is incremented by 1 (step S155) to release the memory area that stored image data of the oldest page so far.

After that, the flow returns to the instruction wait loop (steps S117 to S1111).

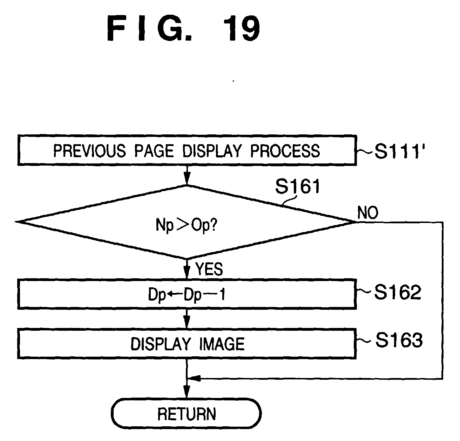

Fig. 19 is a flow chart showing the previous page display processing sequence of a document in the document reading apparatus 1' of the seventh embodiment, which is done in step S1111' in Fig. 16.

The CPU 11' checks if the oldest page pointer Op is smaller than the display page pointer Dp. If Op = Dp (NO in step S161), since there is no more older page than that currently displayed, the CPU 11' ignores the previous page display instruction. In this case, since the oldest page pointer Op never becomes larger than the display page pointer Dp, such possibility is ignored.

On the other hand, if the oldest page pointer Op is smaller than the display page pointer Dp (YES in step S161), the display page pointer Dp is decremented by 1 (step S162) to display data in the buffer memory 6', which is indicated by the display page pointer Dp (step S163).

Upon displaying a document image, image data in the buffer memory 6', which is indicated by the display page pointer Dp, is transferred to the display memory 8', is converted into a video signal by the video signal generator 9, and is output to and displayed by the display apparatus 15 via the display apparatus connector 32.

As a video signal to be generated by the video signal generator 9, analog R, G, and B signals, which are used in personal computers, are prevalently used. Alternatively, data may be transferred as a digital signal specified in DFP (Digital Flat Panel Standard), IEEE1394, or the like as long as that signal can be directly connected to the display apparatus 15 and can inform the display apparatus 15 of a change in data in the display memory 8' to reflect it in the displayed contents.

In the above description, since the values of the latest page pointer Np, display page pointer Dp, and oldest page pointer Op increase every time a process is done, access to the buffer memory 6' based on these pointers actually uses a value obtained by a modulo computation of each pointer value using the number N of document pages that can be stored in the buffer memory 6'. With this control, the buffer memory 6' can be used as a ring buffer. Hence, the memory area released by incrementing the oldest page pointer Op by 1 in step S155 in Fig. 18 is re-assigned as a pre-fetch page buffer area.

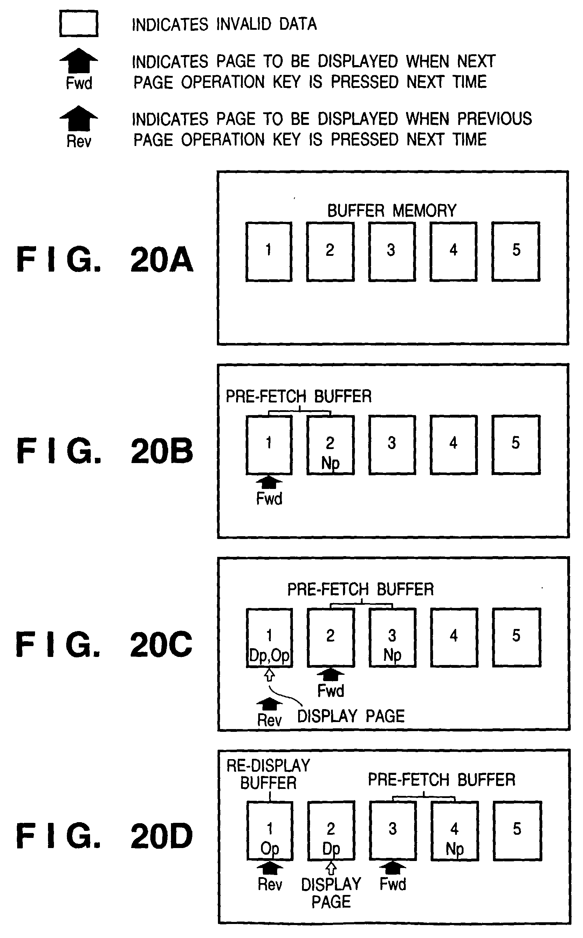

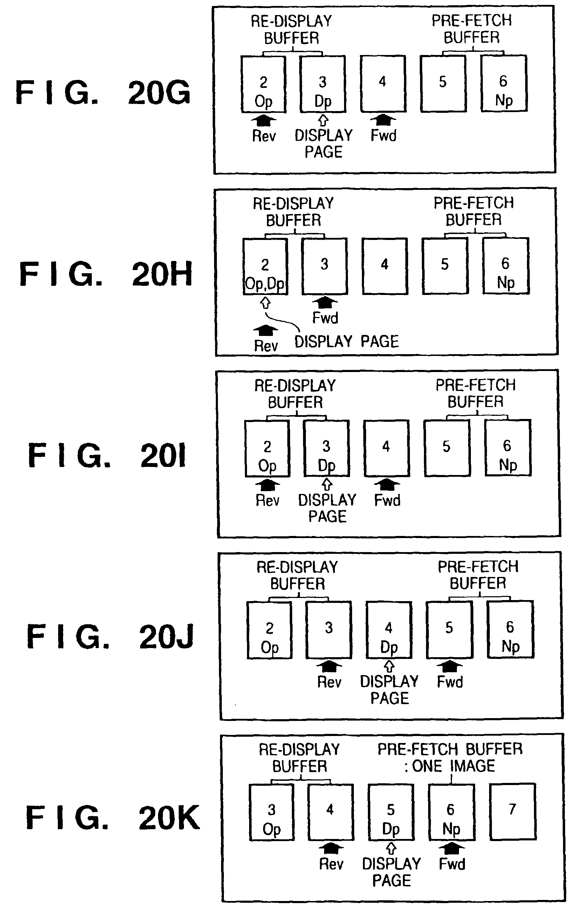

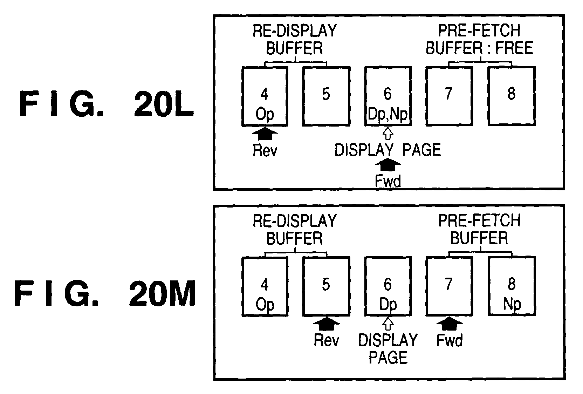

Figs. 20A to 20M show the way the buffer memory 6' is used based on the page management and ring buffer structure according to the seventh embodiment. Assume that the buffer memory 6' can store documents for five pages, and two pages thereof are assigned as pre-fetch pages for saving image information of a newly read document.

Fig. 20A shows the initial state of the buffer memory 6'.

Fig. 20B shows the state of the buffer memory when documents are set and documents for two pages are pre-fetched. In Fig. 20B, the latest page pointer points to buffer memory area 2. After that, since there is no free space in the pre-fetch buffer, no more new document can be read unless a display instruction of a pre-fetched document is issued.

Fig. 20C shows the state of the buffer memory 6' upon displaying a document image of the first page when the next page display operation is done and the display page pointer Dp points to the document of the first page, and upon storing a pre-fetched document image of the third page in a free pre-fetch memory area which is formed upon displaying the document image of the first page.

Fig. 20D shows the state of the buffer memory 6' upon displaying a document image of the second page when another next page display operation is done and the display page pointer Dp points to the document of the second page, and upon storing a pre-fetched document image of the fourth page in a free pre-fetch memory area which is formed upon displaying the document image of the second page. At this time, image data for one page is stored in the re-display memory area, and the oldest page pointer Op is set at buffer memory area 1.

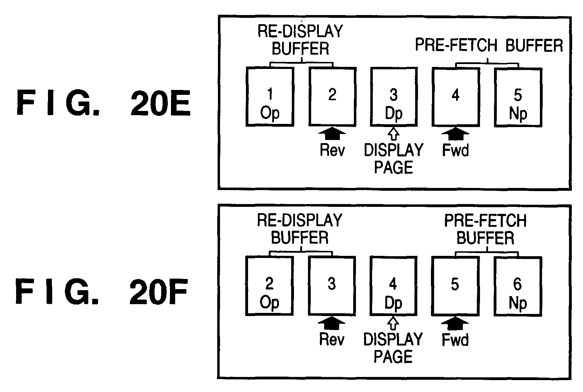

Fig. 20E shows the state of the buffer memory 6' upon displaying a document image of the third page when still another next page display operation is done and the display page pointer Dp points to the document of the third page, and upon storing a pre-fetched document image of the fifth page in a free pre-fetch memory area which is formed upon displaying the document image of the third page.

Fig. 20F shows the state of the buffer memory 6' upon displaying a document image of the fourth page when still another next page display operation is done and the display page pointer Dp points to a document of the fourth page. At this time, since the number of pages of the already displayed images has exceeded the number of pages assigned to re-display, the oldest page (first page) is discarded, and free memory area 1 formed accordingly is re-assigned to a pre-fetch memory area to store a pre-fetched document image of the sixth page.

Fig. 20G shows the state of the buffer memory 6' upon displaying the document image of the third page when the previous page display operation is done from the state shown in Fig. 20F and the display page pointer Dp is decremented by 1.

Fig. 20H shows the state of the buffer memory 6' upon displaying the document image of the second page when another previous page display operation is done and the display page pointer Dp is further decremented by 1. After that, even when the previous page display operation is repeated, since there is no more older page than that currently displayed, this operation is ignored.

Fig. 20I shows the state of the buffer memory 6' upon displaying the document image of the third page when the next page display operation is done in the state in Fig. 20H and the display page pointer Dp is incremented by 1.

Fig. 20J shows the state of the buffer memory 6' upon displaying the document image of the fourth page when another next page display operation is done and the display page pointer Dp is incremented by 1.

Fig. 20K shows the state of the buffer memory 6' upon displaying the document image of the fifth page when still another next page display operation is done and the display page pointer Dp is incremented by 1. At this time, since the number of pages of the already displayed images has exceeded the number of pages assigned to re-display, the second page indicated by the oldest page pointer Op is discarded, and the area for the discarded second page is re-assigned to a pre-fetch page area. Note that no document to be pre-fetched is set in this state.

Fig. 20L shows the state of the buffer memory 6' upon displaying the document image of the fifth page when still another next page display operation is done and the display page pointer Dp is incremented by 1. At this time as well, since the number of pages of the already displayed images has exceeded the number of pages assigned to re-display, the third page indicated by the oldest page pointer Op is discarded, and the area for the discarded third page is re-assigned to a pre-fetch page area. Note that no document to be pre-fetched is set also in this state.

After that, even when the next page display operation is done, this operation is ignored until a document to be pro-fetched is set.

Fig. 20M shows the state of the buffer memory 6' when two documents to be pre-fetched are set and read. Since the pre-fetch buffer is free, pre-fetch is done.

As described above, according to the seventh embodiment, since documents to be read are always read in advance, the time required until a document image is displayed can be shortened upon receiving a document display request, and a document image can be re-displayed without re-reading the document to render it again by storing previous image data, thus allowing effective presentation.

In the seventh embodiment, since the number of pages to be pre-fetched is fixed, an unused area is generated in the buffer memory 6' in the initial state. Alternatively, the designated number of pages to be pre-fetched may be used as a minimum value, and the number of pages to be pre-fetched may be dynamically assigned to add all unused areas as pre-fetch areas.

### [Eighth Embodiment]

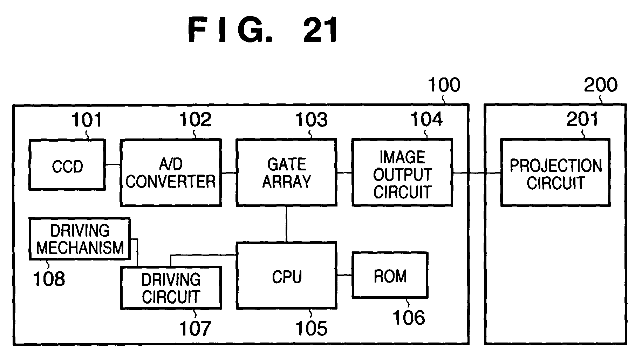

Fig. 21 is a block diagram showing the arrangement of a document reading apparatus and display apparatus in the eighth embodiment.

As shown in Fig. 21, a document reading apparatus 100 is connected to a display apparatus 200 such as a liquid crystal projector, RGB input monitor, TV monitor, or the like, which is commercially available.

In the document reading apparatus 100, reference numeral 101 denotes a CCD that forms a line image sensor; 102, an A/D converter; 103, a gate array; and 104, an image output circuit. Reference numeral 105 denotes a CPU for controlling the processing operation of the overall apparatus; and 106, a ROM for storing a control program, control data, and the like used by the CPU 105. Reference numeral 107 denotes a driving circuit. Reference numeral 108 denotes a driving mechanism which adopts an arrangement for moving a document or an optical system, thus reading a document image by scanning the line image sensor in the sub-scan direction (a direction perpendicular to the main scan direction). Note that a memory (not shown) for storing image data is appropriately arranged. When a document feed mechanism is added, an arrangement for scanning a document while feeding it to the CCD 101, and an arrangement for automatically replacing the document on a document table are available.

An analog signal for one line of a document, which is output from the CCD 101 that forms the line image sensor, is sequentially converted into digital data by the A/D converter 102. The digital data undergoes an image process by the gate array 103, and the processed data is sent to the image output circuit 104. The image output circuit may use a general analog RGB output circuit or a digital monitor interface circuit, or both of them.

Note that the document reading apparatus 100 of the eighth embodiment can change the characteristics of the read resolution by automatic control of the CPU 105 and manual setups, as will he explained in detail later. The gate array 103 executes a filter process to be described later. A filter coefficient as the characteristics of the filter process can be changed by automatic control of the CPU 105 and manual setups.

In the display apparatus 200, reference numeral 201 denotes a projection circuit which projects an image on the basis of image data output from the image output circuit 104.

Since the mechanical arrangement of the document reading apparatus 100 is the same as that which has been explained earlier with reference to Fig. 2 in the first embodiment, a description thereof will be omitted.

The document reading apparatus 100 with the above arrangement is mainly used in presentation or the like, and a document to be read includes printed matter obtained by printing a reference which is created by a personal computer or the like and includes text, images, and the like. When a printed matter including images is used, moiré is generated upon reading a document image and, consequently, poor image is displayed on the display apparatus 200.

On the other hand, due to a difference between the read resolution of the document reading apparatus 100 and the resolution or the like of the display apparatus 200, moiré is generated upon outputting an image on the display apparatus 200 and, consequently, a poor image is displayed on the display apparatus 200. Especially, since the display apparatus 200 of the same type is not always connected to the document reading apparatus 100, the generation level of moiré varies depending on the situations of use.

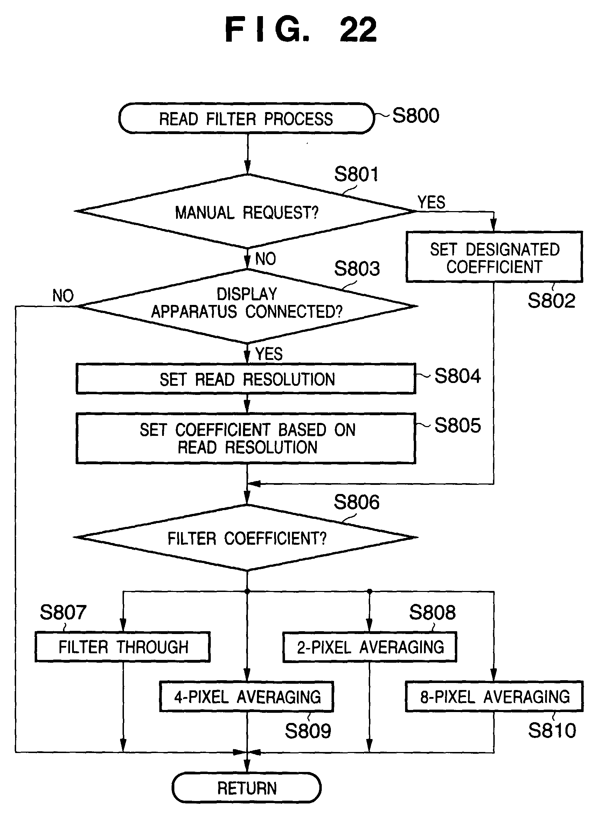

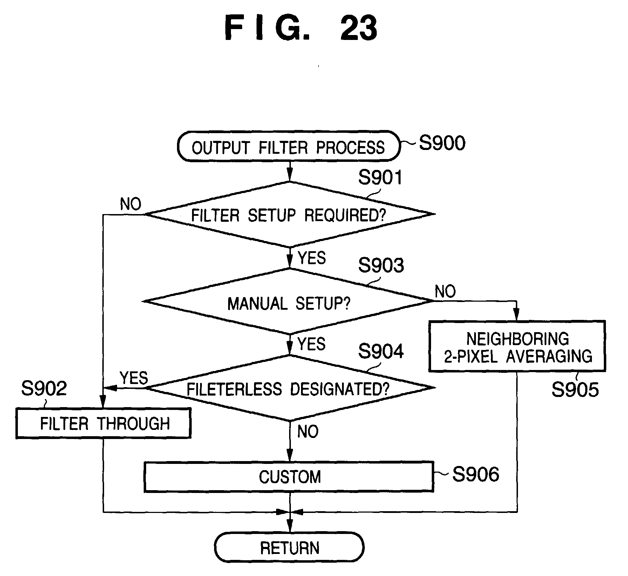

In the eighth embodiment, by executing the filter process, as will be described below, moiré is effectively reduced. The processing operation for reducing moiré in the document reading apparatus 100 of the eighth embodiment will be explained below using the flow charts in Figs. 22 and 23.

Fig. 22 is a flow chart showing a moiré reduction process upon reading a document image. In this flow chart, assume that the power switch of the overall apparatus has been turned on. Step S800 is called from a main processing routine immediately before a document image is read.

It is checked if the operator has made a manual setup of a filter coefficient (step S801).

If the manual setup of the filter coefficient has been made (YES in step S801), a filter coefficient corresponding to the manual setup is set in a filter setup parameter (step S802), and the flow jumps to step S806.

If no manual setup of the filter coefficient is made (NO in step S801), it is checked if the display apparatus 200 is connected (step S803). If the display apparatus 200 is connected, a read resolution corresponding to the resolution of the display apparatus 200 is set (step S804). More specifically, the document reading apparatus 100 reads out display performance information in the display apparatus 200 to acquire the resolution of the display apparatus 200. This display performance information has a data format such as EDID (Extended Display Identification Data) or the like, and may be read out from the display apparatus 200 based on, e.g., DDC (Display Data Channel).

For example, when an RGB input monitor is connected as the display apparatus 200, if its resolution (the number of display dots on the screen area) includes {640 × 480, 800 × 600, 1,024 × 768, 1,152 × 864, 1,280 × 1,024, 1,600 × 1,200}, the read resolution is set at a resolution (dpi) as an integer multiple of {40, 50, 64, 72, 80, 100}.

In step S804, the read resolution corresponding to the resolution of the display apparatus 200 is set. When the operator manually designates a read resolution, the designated read resolution is set.

A filter coefficient corresponding to the set read resolution is set in a filter setup parameter (step S805). For example, if STD represents the optical resolution (the resolution at which the document reading apparatus 100 can physically read), when the read resolution = {STD}, a filter coefficient corresponding to filter through is set; when the read resolution = {STD to STD/2}, a filter coefficient corresponding to a two-pixel averaging filter is set; when the read resolution = {STD/2 to STD/4}, a filter coefficient corresponding to a 4-pixel averaging filter is set; and when the read resolution = {STD/4 or less}, a filter coefficient corresponding to an 8-pixel averaging filter is set.

The filter setup parameter is checked in step S806, and the flow branches to respective filter coefficient processing routines (steps S807 to S810). In step S807, a filter through setup process is done. In step S808, a 2-pixel averaging filter setup process is done. In step S809, a 4-pixel averaging filter setup process is done. In step S810, an 8-pixel averaging filter setup process is done.

If no filter coefficient is manually set (NO in step S801) and no display apparatus is connected (NO in step S803), the processing ends without setting any filter.

Fig. 23 is a flow chart showing a moire reduction process upon outputting image data to the display apparatus 200. In this flow chart, assume that the power switch of the overall apparatus has been turned on, a document image has been read, and image data has already been written in the memory. Step S900 is called from a main processing routine after a document image is read.

It is checked if a filter setup is required (step S901).

For example, if the operator designates a read resolution by a manual setup, it is confirmed if the read resolution matches the resolution of the display apparatus 200. This confirmation can also be implemented by reading out EDID of the display apparatus 200. If the two resolutions match, a filter through mode is set (step S902); otherwise, the flow advances to step S903 to check if the operator has made a manual setup of a filter process upon outputting data to the display apparatus 200. If no manual setup is made, a neighboring two-pixel averaging filter is set (step S905).

On the other hand, if the operator has made a manual setup of a filter process upon outputting data to the display apparatus 200 (YES in step S903) and if the manual setup of the filter process sets a filter other than a filterless mode (NO in step S904), a custom filter designated by the operator is set (step S906). If the manual setup of the filter process sets a filterless mode (YES in step S904), a filter through mode is set (step S902).

As described above, according to the eighth embodiment, since an image signal of a document image read by the line image sensor undergoes the filter process, moiré generated upon reading a document image can be reduced. Also, since the read resolution is set in correspondence with the resolution of the display apparatus 200, moiré generated upon outputting data to the display apparatus 200 can be reduced. Hence, moiré can be effectively reduced, and the image quality of an image displayed on the display apparatus 200 can be improved.

Furthermore, when necessary, e.g., when the read resolution is manually set, an image signal output to the display apparatus 200 also undergoes the filter process. Hence, moiré generated upon outputting data to the display apparatus 200 can he reduced.

In the eighth embodiment, the moiré reduction process upon reading a document image is done by the gate array 103, and that upon outputting data is done by the CPU 105. Also, the CPU 105 sets the read conditions.

### 〈Other Embodiment〉

The present invention can be applied to a system constituted by a plurality of devices (e.g., a host computer, interface and camera head, etc.) or to an apparatus comprising a single device (e.g., a video camera).

Furthermore, the object of the invention can also be attained also by supplying a storage medium storing program codes for performing the aforesaid processes to a computer system or apparatus (e.g., a personal computer), reading the program codes by a CPU or MPU of the computer system or apparatus from the storage medium, and then executing the program.

In this case, the program codes read from the storage medium implement the functions of the embodiment and the storage medium storing the program codes constitutes the invention.

Examples of storage media that can be used for supplying the program code are a floppy disk, hard disk, optical disk, magneto-optical disk, CD-ROM, CD-R, magnetic tape, non-volatile type memory card or ROM, etc.

Furthermore, besides the case where the aforesaid functions according to the embodiment are implemented by executing the program codes read by a computer, the present invention covers a case where an operating system or the like running on the computer performs a part of or the entire process in accordance with the designation of program codes and implements the functions according to the above embodiment.

The present invention further covers a case where, after the program codes read from the storage medium are written in a function expansion card inserted into the computer or in a memory provided in a function expansion unit connected to the computer, a CPU or the like contained in the function expansion card or function expansion unit performs a part of or the entire process in accordance with the designation of program codes and implements the functions of the above embodiment.

In a case where the present invention is applied to the aforesaid storage medium, the storage medium stores program codes corresponding to the flowcharts 3 and 4 and data described in the embodiment.

The above is the explanation of the embodiments of the present invention; however, the present invention is not limited to the embodiments and can be applied to anything as long as functions of the configuration disclosed in the claims or functions of the configuration disclosed in the embodiments are achieved.

For instance, an emission period of a fill-in light is changed in accordance with an accumulation period of the image sensing device in the above embodiments, however, other operation of the fill-in light, such as the intensity of fill-in light, may be changed.

Further, a signal used in focus control is formed by detecting sharpness of an image in the above embodiments, however, the present invention is also applicable to a case where a signal used in focus control is formed in another method.

Furthermore, the hardware configuration and the software configuration of the above embodiments can be properly interchanged each other.

It should be noted that the present invention includes combinations of the aforesaid embodiments or technical elements disclosed therein.

Further, the present invention also includes an apparatus, formed by all or a part of the configuration disclosed in the claims or embodiments of the present invention, which can be used either individually, with another apparatus, or within another apparatus.

Further, the present invention is applicable to: various types of cameras, such as an electronic camera for sensing a moving and/or a still image, a camera using a silver-halide film, a lens-exchangeable camera, a single-lens reflex camera, a leaf shutter camera, and a monitor camera; an image sensing apparatus other than cameras; an optical apparatus; and the like; an apparatus applied to cameras, an image sensing apparatus, an optical apparatus, and the like; control method of the foregoing apparatuses; and a computer program product for providing the control method.

The present invention is not limited to the above embodiments and various changes and modifications can be made within the spirit and scope of the present invention. Therefore, to apprise the public of the scope of the present invention, the following claims are made.

Image information of a document is read by a linear image sensor, and the read image information is stored in a first buffer memory. Upon displaying the image information, the image information stored in the first buffer memory is output to and stored in a second buffer memory and display memory. Storage in the first buffer memory, and output and storage to the second buffer memory and display memory are independently done.

## Claims

1. A document reading apparatus having:
reading means (2), having a linear image sensor, for reading image information of a document;
sub-scan means (4) for changing a relative position between said reading means and a document image at a predetermined speed in a direction perpendicular to a main scan direction of the linear image sensor; and
an A/D converter (5) for converting the image information from said reading means into digital image data,
characterized by comprising:
a buffer memory (6) for at least temporarily storing the image data from said A/D converter;
first transfer means (11) for transferring the image data from said A/D converter to said buffer memory;
a display memory (8) for storing the image data output from said buffer memory;
second transfer means (11) for transferring the image data from said buffer memory to said display memory;
output means (9), connected to a display apparatus, for outputting the image data stored in said display memory to the display apparatus; and
control means (11) for independently controlling a process from when said reading means reads the image information until said first transfer means transfers the image data to said buffer memory, and a process for outputting the image data stored in said display memory from said output means.

2. A document reading apparatus having:
reading means (2), having a linear image sensor, for reading image information of a document;
sub-scan means (4) for changing a relative position between said reading means and a document image at a predetermined speed in a direction perpendicular to a main scan direction of the linear image sensor; and
an A/D converter (5) for converting the image information from said reading means into digital image data,
characterized by comprising:
a first buffer memory (6) for at least temporarily storing the image data from said A/D converter;
first transfer means (11) for transferring the image data from said A/D converter to said first buffer memory;
a second buffer memory (7) for storing the image data which are being displayed and/or were displayed on a display apparatus;
second transfer means (11) for transferring image data from said first buffer memory to said second buffer memory;
a display memory (8) for storing the image data output from said first or second buffer memory;
third transfer means (11) for transferring the image data from said first or second buffer memory to said display memory;
output means (9), connected to the display apparatus, for outputting the image data stored in said display memory to the display apparatus; and
control means (11) for independently controlling a process from when said reading means reads the image information until said first transfer means transfers the image data to said first buffer memory, and a process for outputting the image data stored in said display memory from said output means.

3. The apparatus according to claim 1 or 2, characterized by further comprising:
holding means (18) for holding one or more documents; and
feed means (20, 21) for transferring one of the documents held by said holding means to said reading means.

4. The apparatus according to claim 3, characterized in that said sub-scan means and said feed means are driven by a driving device.

5. The apparatus according to claim 1, characterized in that said first transfer means compresses data, and said second transfer means expands data.

6. The apparatus according to claim 2, characterized in that said first or second transfer means compresses data, and said third transfer means expands data.

7. The apparatus according to any one of claims 1 to 6, characterized in that a display image switching instruction and a display image conversion instruction are issued by a remote-control operation.

8. A document reading apparatus having:
a linear image sensor (2) for reading image information of a document,
characterized by comprising:
a buffer memory (6) for at least temporarily storing the image information;
a display memory (8) for storing the image information output from said buffer memory;
output means (9) for outputting the image information stored in said display memory to a predetermined display apparatus; and
control means (11) for controlling to independently execute a process for storing the image information in said buffer memory, and a process for outputting the image information from said display memory to the display apparatus by said output means.

9. The apparatus according to claim 8, characterized by further comprising another buffer memory (7) which stores data which are being displayed and/or were displayed.

10. A document reading method characterized by comprising:
the reading step (S12) of reading image information of a document using a linear image sensor;
the first storage step (S12) of at least temporarily storing the image information in a buffer memory;
the second storage step (S64, S80, S86) of storing the image information output from the buffer memory in a display memory; and
the output step of outputting the image information stored in the display memory to a display apparatus,
wherein the first storage step and the output step are independently executed.

11. The method according to claim 10, characterized by further comprising the step (S44) of storing data which are being displayed and/or were displayed in the other buffer memory.

12. A document reading method characterized by comprising:
the reading step (S12) of reading image information of a document using a linear image sensor;
the first storage step (S12) of at least temporarily storing the image information in a first buffer memory;
the second storage step (S44) of storing the image information stored in the first buffer memory in a second buffer memory;
the third storage step (S64, S80, S86) of storing the image information output from the first or second buffer memory in a display memory; and
the output step of outputting the image information stored in the display memory to a display apparatus,
wherein the first storage step and the output step are independently executed.

13. The method according to claim 10, characterized in that data is compressed in the first storage step, and data is expanded in the second storage step.

14. The method according to claim 12, characterized in that data is compressed in the first or second storage step, and data is expanded in the third storage step.

15. The apparatus according to claim 1 or 2, characterized by further comprising:
display performance acquisition means (10, 13) for acquiring display performance of an external display apparatus; and
setting means (11) for setting a read condition of said reading means and/or an output condition of said output means in accordance with the display performance of the external display apparatus.

16. A document reading apparatus having:
reading means (2) for reading image information of a document using an image sensor; and
output means (9) for converting the image information read by said reading means into image data of predetermined format, and outputting the image data to an external display apparatus,
characterized by comprising:
display performance acquisition means (10, 13) for acquiring display performance of the external display apparatus; and
setting means (11) for setting a read condition of said reading means and/or an output condition of said output means in accordance with the display performance of the external display apparatus.

17. The apparatus according to claim 15 or 16, characterized in that the read condition is at least one of a read resolution, the number of read gray levels, and a read pattern of the document, and the output condition is at least one of the number of display pixels and the number of display colors.

18. The apparatus according to any one of claims 15 to 17, characterized in that said display performance acquisition means includes a switch (13), and at least one of a plurality of pre-stored display performances is selected by said switch upon designating the display performance of the external display apparatus.

19. The apparatus according to any one of claims 15 to 18, characterized in that said display performance acquisition means includes read-out means (10) of the display performance information in the external display apparatus.

20. The apparatus according to claim 19, characterized in that said display performance acquisition means includes a switch (13), and at least one of a plurality of pre-stored display performances selected by said switch or the display performance information in the external display apparatus read out by said read-out means is selected upon setting the output condition for outputting data to the external display apparatus.

21. The apparatus according to any one of claims 15 to 20, characterized in that said setting means sets the read condition of said reading means in accordance with the display performance of the external display apparatus and a read pattern of the document.

22. The apparatus according to any one of claims 15 to 21, characterized in that the display performance of the external display apparatus is resolution information of the external display apparatus.

23. The apparatus according to any one of claims 15 to 22, characterized by further comprising detection means (11) for detecting a blank portion of a document to be read.

24. The apparatus according to any one of claims 15 to 22, characterized by further comprising detection means (11) for detecting at least one information of a document size, a portrait or landscape position, and a desired resolution from marks formed on a document to be read.

25. The apparatus according to any one of claims 15 to 22, characterized by further comprising detection means (11) for detecting at least one information of a size and direction of a specific character or numeral of a document to be read.

26. The apparatus according to any one of claims 15 to 25, characterized in that the image sensor is a linear image sensor.

27. The method according to claim 10 or 12, characterized by further comprising:
the display performance acquisition step (S91 - S94) of acquiring display performance of an external display apparatus; and
the setting step (S97) of setting a read condition in the reading step and/or an output condition in the output step in accordance with the display performance of the external display apparatus.

28. A document reading method having:
the reading step of reading image information of a document using an image sensor; and
the output step of converting the image information read in the reading step into image data of predetermined format, and outputting the image data to an external display apparatus,
characterized by comprising:
the display performance acquisition step (S91 - S94) of acquiring display performance of the external display apparatus; and
the setting step (S97) of setting a read condition in the reading step and/or an output condition in the output step in accordance with the display performance of the external display apparatus.

29. The method according to claim 27 or 28, characterized in that the read condition is at least one of a read resolution, the number of read gray levels, and a read pattern of the document, and the output condition is at least one of the number of display pixels and the number of display colors.

30. The method according to any one of claims 27 to 29, characterized in that, in the display performance acquisition step, at least one of a plurality of pre-stored display performances is selected.

31. The method according to any one of claims 27 to 30, characterized in that, in the display performance acquisition step, the display performance information in the external display apparatus is read out.

32. The method according to claim 31, characterized in that, in the display performance acquisition step, at least one of a plurality of pre-stored display performances or the display performance information read out from the external display apparatus upon setting the output condition for outputting data to the external display apparatus is selected.

33. The method according to any one of claims 27 to 32, characterized in that, in the setting step, the read condition in the reading step is set in accordance with the display performance of the external display apparatus and a read pattern of the document.

34. The method according to any one of claims 27 to 33, characterized in that the display performance of the external display apparatus is resolution information of the external display apparatus.

35. The method according to any one of claims 27 to 34, characterized by further comprising the detection step of detecting a blank portion of a document to be read.

36. The method according to any one of claims 27 to 34, characterized by further comprising the detection step of detecting at least one information of a document size, a portrait or landscape position, and a desired resolution from marks formed on a document to be read.

37. The method according to any one of claims 27 to 34, characterized by further comprising the detection step of detecting at least one information of a size and direction of a specific character or numeral of a document to be read.

38. The method according to any one of claims 27 to 37, characterized in that the image sensor is a linear image sensor.

39. A document reading apparatus having:
reading means (2), having a linear image sensor, for reading image information of a document;
sub-scan means (4) for changing a relative position between said reading means and a document image at a predetermined speed in a direction perpendicular to a main scan direction of the linear image sensor; and
an A/D converter (5) for converting the image information from said reading means into digital image data,
characterized by comprising:
a memory (6) for storing the image data from said A/D converter, and capable of simultaneously storing image data which is being displayed by a display means and image data before display; and
output means (9) for outputting the image data stored in said memory to the display apparatus.

40. The apparatus according to claim 39, characterized in that when an unused area is available on said memory, the unused area is automatically used as an area for storing the image data before display.

41. The apparatus according to claim 39 or 40, characterized by further comprising:
holding means (18) for holding one or more documents; and
feed means (20, 21) for transferring one of the documents held by said holding means to said reading means.

42. The apparatus according to claim 41, characterized in that said sub-scan means and said feed means are driven by a driving device.

43. The apparatus according to any one of claims 39 to 42, characterized in that a display image switching instruction and a display image conversion instruction are issued by a remote-control operation.

44. A document reading apparatus having:
a linear image sensor (2) for reading image information of a document;
a memory (6) for at least temporarily storing the image information; and
output means (9) for outputting the image information stored in said memory to a display apparatus,
characterized in that said memory can simultaneously store image information which is being displayed by the display apparatus, and image information before display.

45. A document reading method characterized by comprising:
the reading step (S12) of reading image information of a document using a linear image sensor;
the first storage step (S12) of at least temporarily storing the image information read in the reading step in a memory;
the output step of outputting the image information stored in the memory to a display apparatus; and
the second storage step of storing image information, which is being displayed by the display apparatus, in the memory.

46. The method according to claim 45, characterized in that when an unused area is available on the memory, the unused area is automatically used as an area for storing the image data before display.

47. A document reading apparatus having:
image reading means (101) for reading a document image; and
output means (104) for outputting an image signal of the document image read by said image reading means to a display apparatus,
characterized by comprising:
read condition setting means (105) for setting a read condition of said image reading means in accordance with display performance of the display apparatus; and
first moire reduction process means (103) for executing a moiré reduction process for the image signal of the document image read by said image reading means.

48. The apparatus according to claim 47, characterized in that the display performance of the display apparatus is obtained by reading display performance information from the display apparatus.

49. The apparatus according to claim 47 or 48, characterized by further comprising moiré reduction process control means (105) for controlling a characteristic of the moire reduction process in said first moiré reduction process means in accordance with the read condition.

50. The apparatus according to any one of claims 47 to 49, characterized in that the read condition by said image reading means can be manually set.

51. The apparatus according to claim 50, characterized by further comprising:
second moiré reduction process means for executing a moiré reduction process for the image signal of the document image to be output to the display apparatus, and
in that when the read condition is manually set, said moiré reduction process control means controls to make said second moiré reduction process means execute the moiré reduction process.

52. The apparatus according to any one of claims 47 to 51, characterized in that the moire reduction process is a filter process.

53. The apparatus according to claim 52, characterized in that said moiré reduction process control means sets and changes a filter coefficient of the filter process as the characteristic of the moiré reduction process.

54. The apparatus according to claim 52 or 53, characterized in that the filter coefficient can be manually set.

55. The apparatus according to any one of claims 47 to 54, characterized in that said image reading means is a line image sensor, which has an arrangement for reading the document image by scanning in a sub-scan direction as a direction perpendicular to a main scan direction.

56. The apparatus according to any one of claims 47 to 55, characterized in that the display performance of the display apparatus includes a resolution of the display apparatus.

57. A document reading method for reading a document image by image reading means, and outputting an image signal of the read document image to a display apparatus, characterized by comprising:
the setting step (S804) of setting a read condition of the image reading means in accordance with display performance of the display apparatus; and
the first moiré reduction process step (S807 - S810) of executing a moiré reduction process for the image signal of the document image read by the image reading means.

58. The method according to claim 57, characterized by further comprising the step (S804) of reading the display performance of the display apparatus from the display apparatus.

59. The method according to claim 57 or 58, characterized by further comprising the moiré reduction process control step (S118) of controlling a characteristic of the moiré reduction process of the first moiré reduction process step in accordance with the read condition.

60. The method according to any one of claims 57 to 59, characterized by further comprising the step (S804) of manually setting the read condition of the image reading means.

61. The method according to claim 60, characterized by further comprising:
the second moire reduction process step of executing a moiré reduction process for the image signal of the document image to be output to the display apparatus, and
in that, in the moiré reduction process control step, the moiré reduction process is controlled to execute in the second moiré reduction process step when the read condition is manually set.

62. The method according to any one of claims 57 to 61, characterized in that the moiré reduction process is a filter process.

63. The method according to claim 62, characterized in that, in the moiré reduction process control step, a filter coefficient of the filter process as the characteristic of the moiré reduction process is set and changed.

64. The method according to claim 62 or 63, characterized by further comprising the step (S802) of manually setting the filter coefficient.

65. A computer readable program including instructions for controlling the processor to control a document reading apparatus to carry out the method of any one of claims 10 - 14, 27 - 38, 45 - 46, and 57 - 64.
